**Europäisches Patentamt**

**European Patent Office**

**Office européen des brevets**

(19)

(11) Veröffentlichungsnummer : **0 293 703 B1**

(12)

# EUROPÄISCHE PATENTSCHRIFT

(45) Veröffentlichungstag der Patentschrift :
13.09.95 Patentblatt 95/37

(51) Int. Cl.$^6$ : **H04N 1/40**

(21) Anmeldenummer : **88108184.8**

(22) Anmeldetag : **21.05.88**

(54) Verfahren zum Aufzeichnen von Quasihalbtonbildern und Vorrichtung zur Umwandlung von Bildpunkt-Tonwertdaten.

(30) Priorität : **03.06.87 DE 3718521**

(43) Veröffentlichungstag der Anmeldung :
**07.12.88 Patentblatt 88/49**

(45) Bekanntmachung des Hinweises auf die
Patenterteilung :
**13.09.95 Patentblatt 95/37**

(84) Benannte Vertragsstaaten :
**BE CH DE ES FR GB IT LI NL SE**

(56) Entgegenhaltungen :
**EP-A- 0 132 453**
**WO-A-81/00466**

(73) Patentinhaber : **DU PONT DE NEMOURS
(DEUTSCHLAND) GMBH
Hans-Böckler-Strasse 33
D-40476 Düsseldorf (DE)**
(84) **BE CH DE ES IT LI NL SE**
Patentinhaber : **E.I. DU PONT DE NEMOURS
AND COMPANY
1007 Market Street
Wilmington Delaware 19898 (US)**
(84) **FR GB**

(72) Erfinder : **Fischer, Gerhard
Mainstrasse 19
D-6050 Offenbach (DE)**
Erfinder : **Quabeck, Helmut, Dr.
Finkenweg 9
D-6113 Babenhausen (DE)**

(74) Vertreter : **Selting, Günther, Dipl.-Ing. et al
Patentanwälte
von Kreisler, Selting, Werner
Postfach 10 22 41
D-50462 Köln (DE)**

EP 0 293 703 B1

EP 0 293 703 B1

## Beschreibung

Die Erfindung betrifft ein Verfahren zum Aufzeichnen von Quasihalbtonbildern, bei dem eine Vorlage auf einem Aufzeichnungsmedium durch einzelne Aufzeichnungselemente mit dem Farbwert "Voll" oder "Null" wiedergegeben wird, die Vorlage in mehrere aus einzelnen Abtastelementen bestehende Abtastfelder aufgeteilt wird und jedes Abtastfeld in kleinste Teilfelder niedrigster Ordnung mit jeweils mehreren zugeordneten Aufzeichnungselementen und in Teilfelder jeweils höherer Ordnung unterteilt wird, die aus einer vorgebbaren Anzahl von kleinsten Teilfeldern bzw. Teilfeldern jeweils niedrigerer Ordnung bestehen.

Mit einem derartigen Verfahren können Vorlagen auf einem Aufzeichnungsmedium, wie z.B. einem Blatt Papier, einer Druckplatte oder einem Bildschirm durch einzelne gleichgroße Aufzeichnungselemente (nachfolgend auch mit Aufzeichnungspunkte bezeichnet), die entweder ganzflächig eingefärbt oder ganzflächig nicht eingefärbt sind, wiedergegeben werden. Dabei wird zunächst die Bildinformation der Vorlage durch eine Sensor- bzw. Abtastvorrichtung, wie z.B. einem Scanner, aufgenommen. Der Scanner gibt für jeden Bildpunkt (Abtastpunkt oder -element) ein Signal aus, das dem Tonwert (bei farbigen Vorlagen die Farbtönung) des Abtastpunktes entspricht. Bei einer Schwarz-Weiß-Vorlage werden die Grautöne, die von Schwarz bis Weiß reichen, auf dem Aufzeichnungsmedium dadurch realisiert, daß die Häufigkeit der schwarz eingefärbten Aufzeichnungspunkte in Abhängigkeit von dem zu realisierenden Grauton variiert wird. Sämtliche Aufzeichnungspunkte eines schwarzen Bereichs der Vorlage sind in der Wiedergabe schwarz, während der Anteil von zwischen den schwarzen Aufzeichnungspunkten angeordneten weißen Aufzeichnungspunkten in Bereichen mit geringerer Schwärzung zunimmt, d.h., daß die Häufigkeit der schwarz eingefärbten Aufzeichnungspunkte geringer ist. In weißen Bereichen der Vorlage sind schließlich sämtliche Aufzeichnungspunkte weiß, d.h. nicht eingefärbt. Auf diese Weise läßt sich die Grauskala in zahlreichen diskreten Stufen, d.h. quasikontinuierlich, wiedergeben. Im Zusammenhang mit derartig wiedergegebenen Bildern spricht man daher auch von "Quasihalbtonbildern", mit denen die Tonwerte der Tonwertskala gemäß einer zuvor vorgenommenen Einteilung in Tonwertabstufungen wiedergegeben werden.

Die Verarbeitung solcher Quasihalbtonbilder mit Hilfe der Digitaltechnik ist sehr einfach, da die Bildverarbeitung binär erfolgen kann ("1" bzw. "L" für einen einzufärbenden und "O" für einen nicht einzufärbenden Aufzeichnungspunkt). Das Quasihalbtonbild entspricht also einer binären Aufzeichnung der Bildinformation einer Vorlage, die deshalb auch einfach auf einem Speichermedium, wie z.B. einem Magnetband, einer Magnetplatte oder einer Diskette, aufgezeichnet aber auch beispielsweise in einen Halbleiterspeicher eingeschrieben werden kann.

Im Rahmen der Erfindung ist mit dem Wort "Aufzeichnen" jede Möglichkeit der Aufzeichnung der Vorlage als Quasihalbtonbild gemeint. Hierunter fallen insbesondere die Wiedergabe der Vorlage auf einem Blatt Papier oder auf einem Bildschirm, die Erstellung einer für die Wiedergabe der Vorlage geeigneten Druckplatte und die Abspeicherung der Vorlage in einem Speicher.

Ein Verfahren zum binären Aufzeichnen von Vorlagen ist aus US-A-4 578 713 bekannt. Bei diesem Verfahren wird eine Vorlage zeilenweise abgetastet, der Tonwert jedes Abtastpunktes ermittelt und abgespeichert. Die Vorlage wird in mehrere Abtastfelder, die jeweils mehrere Abtastpunkte umfassen, unterteilt, d.h. die Tonwertdaten für die Abtastpunkte der Vorlage werden in Datenblöcke unterteilt. Für jeden Datenblock wird aus den zugehörigen Tonwertdaten durch Mittelung der mittlere Tonwert (durchschnittlicher Tonwert des Datenblocks) berechnet. Daraufhin wird die Anzahl derjenigen Aufzeichnungspunkte bestimmt, die zur Wiedergabe des mittleren Tonwerts erforderlich ist. Die Verteilung der pro Abtastfeld einzufärbenden Aufzeichnungspunkte wird durch sukzessives Unterteilen des Abtastfeldes in kleinste Teilblöcke bestimmt. Für die in jedem Unterteilungsschritt entstehenden kleineren Datenblöcke wird aus den Tonwerten der zugehörigen Abtastpunkte der mittlere Tonwert und die Anzahl der zur Realisierung dieses mittleren Tonwerts einzufärbenden zugehörigen Aufzeichnungspunkte bestimmt. Bei dem bekannten Verfahren wird zwecks Bestimmung der Anzahl der innerhalb der Teilfelder einzufärbenden Aufzeichnungspunkte mit der Untersuchung des Abtastfeldes selbst bzw. der größten Teilfelder begonnen und mit der Betrachtung immer kleiner werdender Teilfelder fortgefahren, bis das Abtastfeld schließlich in die einzelnen Abtastpunkte unterteilt ist. Neben der Ermittlung der Anzahl und der Verteilung der einzufärbenden Aufzeichnungspunkte muß in jeder Stufe auch eine Fehlerberechnung durchgeführt werden, die mit zunehmender Unterteilung immer aufwendiger wird, da die Anzahl der Teildatenblöcke von Unterteilungsschritt zu Unterteilungsschritt steigt und zwar quadratisch. Aufgrund dieser immer umfangreicher werdenden Fehlerberechnungen werden die Vorteile der digitalen Bildverarbeitung eingebüßt.

Aus EP-A-0 132 453 ist ein Aufzeichnungsverfahren bekannt, bei dem zur Verhinderung einer Akkumulation von Aufzeichnungsfehlern bereichsweise Aufzeichnungsfehler kompensiert werden. Gemäß dem bekannten Verfahren soll ein Abtastpunkt in der Reproduktion durch mehrere Aufzeichnungspunkte mit dem Farbwert "Voll" oder "Null" wiedergegeben werden. Dabei entsteht pro wiederzugebendem Abtastpunkt ein absoluter Aufzeichnungsfehler (Absolutfehler), was die Wiedergabe des Tonwerts des Abtastpunkts betrifft. Wer-

2

den jeweils mehrere Abtastpunkte zu einem Teilfeld zusammengefaßt, so entsteht also pro Teilfeld ein akkumulierter Absolutfehler, der einen bestimmten Schwellenwert nicht übersteigen darf, damit noch von einer in Bezug auf den Tonwert im Detail relativ genauen, d.h. bei Betrachtung noch nicht verfälschend wirkenden Wiedergabe gesprochen werden kann. Ist der Akkumulationsfehler größer als der Schwellenwert, so wird für einen oder mehrere Abtastpunkte bewußt eine andere als die sich (nach Rundung) rechnerisch ergebende Anzahl von zu druckenden Aufzeichnungspunkten vorgegeben, und zwar derart, daß der sich jetzt ergebende Akkumulationsfehler wieder kleiner ist als der Schwellenwert (maximal zulässiger Fehler). Auf Kosten einer Erhöhung des Absolutfehlers eines bzw. einiger weniger aufgezeichneter Abtastpunkte eines Teilfeldes wird also erreicht, daß der Tonwert des Teilfeldes im Mittel mit einer vorgegebenen Mindestgenauigkeit (Schwellenwert) wiedergegeben wird.

Der Erfindung liegt die Aufgabe zugrunde, ein Verfahren zum binären Aufzeichnen von Vorlagen der eingangs genannten Art zu schaffen, das ohne Fehlerbetrachtung auskommt.

Zur Lösung dieser Aufgabe ist bei dem eingangs genannten Verfahren erfindungsgemäß vorgesehen,

- daß für jedes kleinste Teilfeld bestimmt wird, ob die Summe aus den Tonwerten der zu dem betrachteten kleinsten Teilfeld gehörenden Abtastelemente größer ist als ein vorgebbarer Referenztonwert, wobei eines der dem betrachteten kleinsten Teilfeld zugeordneten Aufzeichnungselemente wiedergegeben wird, wenn die Summe größer ist als der Referenztonwert,

- daß danach für die Teilfelder jeweils höherer Ordnung bestimmt wird, ob die Summe aus den Tonwerten der zu dem betrachteten Teilfeld höherer Ordnung gehörenden Abtastelemente abzüglich eines dem maximalen Tonwert entsprechenden Tonwertes für jedes Aufzeichnungselement, das einem der dem betrachteten Teilfeld zugeordneten Teilfelder niedrigerer Ordnung bzw. Ordnungen zugeordnet ist und zuvor als wiederzugebendes Aufzeichnungselement ermittelt wor den ist, größer ist als der vorgebbare Referenztonwert, und, wenn dies der Fall ist, ein weiteres der dem jeweils betrachteten Teilfeld höherer Ordnung zugeordneten Aufzeichnungselemente wiedergegeben wird, und

- daß die Positionen der in den Teilfeldern verschiedener Ordnung wiederzugebenden Aufzeichnungselemente derart bestimmt werden, daß jedes einem Abtastfeld zugeordnete Aufzeichnungselement höchstens einmal wiedergegeben wird.

Mit dem erfindungsgemäßen Verfahren wird die Verteilung der einzufärbenden bzw. der nicht einzufärbenden Aufzeichnungspunkte bestimmt, mit denen ein Abtastfeld der Vorlage in der Wiedergabe dargestellt wird. Die Anzahl der pro Teilfeld bzw. pro Abtastfeld einzufärbenden Aufzeichnungspunkte ist davon abhängig, ob der mittlere Tonwert der in einem Abtastfeld bzw. Teilfeld liegenden Abtastpunkte größer als, kleiner als oder gleich einem vorgegebenen Referenztonwert ist. Soll die Vorlage gleichhell wiedergegeben werden, so ist der Referenztonwert gleich dem größtmöglichen Tonwert, bei Schwarz-Weiß-Vorlagen entspräche der Referenztonwert also ein dem Tonwert für Schwarz. Soll die Vorlage dunkler (heller) wiedergegeben werden, so ist der Referenzwert kleiner (größer) als zuvor angegeben. Durch Anheben der größten in einer Vorlage vorkommenden Tonwerte und/oder durch Absenken der kleinsten in der Vorlage vorkommenden Tonwerte kann eine Verstärkung des Kontrastes der Vorlage in der Aufzeichnung erzielt werden.

Die Lage der in Abhängigkeit von dem Vergleich der Mittelwerte mit dem Referenztonwert wiederzugebenden Aufzeichnungselemente in den Teilfeldern verschiedener Ordnung ist derart bestimmt, daß jedes Aufzeichnungselement einmal gedruckt wird. Die Lage der zu den jeweiligen Teilfeldern gehörenden potentiell zu druckenden Aufzeichnungspunkte, ist innerhalb gleichgroßer Teilfelder zufällig gewählt. Entscheidend ist, daß innerhalb höherrangiger Teilfelder, die sich jeweils aus niederrangigeren kleineren Teilfeldern zusammensetzen, die Lage der potentiell zu druckenden Aufzeichnungspunkte so festgelegt ist, daß jeder Aufzeichnungspunkt höchstens einmal gedruckt wird, d.h. maximal einmal "angesprochen" wird. Die Lagemuster für die in den verschieden großen Teilfeldern potentiell zu druckenden Aufzeichnungspunkte würden also bei Überlagerung ein volleingefärbtes Feld ergeben.

Bei dem erfindungsgemäßen Verfahren wird zunächst von den kleinsten Teilfeldern, in die ein Abtastfeld der Vorlage unterteilt wird, ausgegangen. D.h., daß zunächst die Tonwertdaten der kleinsten Datenblöcke betrachtet werden. Für jeden kleinsten Block wird aus den zugehörigen Tonwertdaten der mittlere Tonwert, also der Mittelwert bestimmt. Ist dieser Mittelwert größer als der Referenztonwert, wird mindestens einer der dem betrachteten kleinsten Teilfeld zugeordneten Aufzeichnungspunkte gedruckt, bzw. genauer gesagt, als zu druckender Aufzeichnungspunkt betrachtet. Daraufhin werden die nächstgrößeren Teilfelder, die sich jeweils aus einer bestimmten Anzahl von kleinsten Teilfeldern zusammensetzen, betrachtet. Aus den Tonwertdaten der diesen nächstgrößeren Teilfeldern entsprechenden Datenblöcken wird der mittlere Tonwert bestimmt. Dabei ist aufgrund der vorherigen Betrachtungen bekannt, ob und, wenn ja, für welche kleinsten Teilfelder, die zu einem Telfeld höherer Ordnung gehören, ein oder mehrere Aufzeichnungspunkte zu drucken sind. Dies fließt in die nachfolgenden Berechnungen ein, indem von der Tonwertsumme der Abtastelemente eines Teilfeldes höherer Ordnung der dem Aufzeichnungselement-Farbwert "Voll" entsprechen de Tonwert subtrahiert wird,

3

und zwar der Anzahl derjenigen Aufzeichnungselemente entsprechend oft, die bei der Untersuchung der Teilfelder niedriger Ordnung bzw. Ordnungen, welche das gerade betrachtete Teilfeld (höherer Ordnung) bilden, als zu druckende Aufzeichnungselemente ermittelt worden sind. Ist der sich dabei ergebende Ergebniswert größer als der Referenztonwert, so wird einer der dem betrachteten nächstgrößeren Teilfeld zugeordneten Aufzeichnungspunkte gedruckt. Neben den in Abhängigkeit von dem mittleren Tonwert der Abtastelemente der kleinsten Teilfelder gedruckten Aufzeichnungspunkten wird also in bezug auf die nächstgrößeren Teilfelder ein weiterer Aufzeichnungspunkt gedruckt, wenn die obige Tonwertberechnung des nächstgrößeren Teilfeldes größer als der Referenztonwert ist. In der nächsten Phase des Verfahrens werden wiederum die nächstgrößeren Teilfelder in der zuvor beschriebenen Weise untersucht, bis schließlich in einer letzten Phase des Verfahrens das Abtastfeld selbst untersucht wird. Ist der sich gemäß obiger Berechnung ergebende "Wert" sämtlicher in dem Abtastfeld liegender Abtastelemente größer als der Referenztonwert, wird aus der Menge der dem Abtastfeld entsprechenden Aufzeichnungspunkte einer gedruckt.

Gemäß dem erfindungsgemäßen Verfahren werden einerseits pro Abtastfeld so viele Aufzeichnungspunkte gedruckt, daß der Tonwert jedes Abtastfeldes der Vorlage im Mittel exakt wiedergegeben wird und andererseits die zu druckenden Aufzeichnungspunkte derart auf das Abtastfeld verteilt, daß die Vorlage mit geringstmöglichem Schärfeverlust, oder anders ausgedrückt mit maximal genauer Detailwiedergabe, aufgezeichnet ist. Für eine gute Reproduktion einer Vorlage ist nämlich neben der Tatsache, daß die Tonwerte der Vorlage nahezu exakt wiedergegeben werden, auch entscheidend, daß die Vorlage im Detail genau, d.h. mit maximaler Auflösung wiedergegeben wird. Die Einteilung der Vorlage in die Abtastfelder läßt nur eine relativ geringe Auflösung der Vorlage zu; die Aufteilung der Vorlage in die Abtastfelder hat allerdings auch nur die Aufgabe, die Mindestanforderungen hinsichtlich der mittleren Tonwerte sicher zu erfüllen, d.h. zumindest die Tonwerte bezogen auf die Abtastfelder der Vorlage nahezu exakt wiederzugeben. Das gewünschte Auflösungsvermögen und damit eine Wiedergabe der Vorlage mit der gewünschten Schärfe wird dadurch erreicht, daß ausgehend von den kleinsten Teilfeldern für jedes Teilfeld auf der Grundlage des mittleren Tonwerts des Teilfeldes aus der Menge der dem Teilfeld jeweils zugeordneten Aufzeichnungspunkte mindestens einer gedruckt wird. Weshalb die Detailwiedergabe einer Vorlage mit zunehmender Unterteilung der Abtastfelder in immer kleinere Teilfelder die Genauigkeit der Detailwiedergabe erhöht, soll nachfolgend anhand eines Beispiels erläutert werden.

Das menschliche Auge kann erfahrungsgemäß etwa bis zu 150 Tonwertstufen (also im Falle eines Schwarz-Weiß-Bildes ca. 150 Graustufen von schwarz bis weiß) visuell unterscheiden. Der Tonwert eines Abtastfeldes sollte also durch eine von 150 Tonwertstufen wiedergegeben werden können, wobei das Abtastfeld (d.h. die Bereiche der Vorlage, innerhalb derer das menschliche Auge Tonwerte unterscheiden kann) nicht zu groß gewählt werden darf. Da die Vorlage nur durch einzelne Aufzeichnungspunkte mit dem Farbwert "Voll" oder "Null" wiedergegeben wird, muß ein Abtastfeld durch mindestens 150 Aufzeichnungspunkte wiedergegeben werden. Je nach der Anzahl der für dieses Abtastfeld eingefärbten Aufzeichnungspunkte ergeben sich 150 Tonwertstufen.

Die zur Bildverarbeitung heute übliche Digitaltechnik legt deshalb für die Größe des Abtastfeldes nahe, daß dieses 256 Abtastpunkte umfaßt bzw. durch 256 Aufzeichnungspunkte wiedergegeben wird. Die Abtast- bzw. Aufzeichnungspunkte sind jeweils in einer (16 x 16)-Matrix angeordnet. Der mittlere Tonwert eines solchen Abtastfeldes kann quasi exakt aufgezeichnet werden, nämlich durch eine von 256 Tonwertstufen (d.h. mit einer Genauigkeit von 1/256). Legt man beispielsweise als Durchmesser eines Abtastpunktes etwa $20\mu m$ zugrunde, so erhält man ein Abtastfeld der Größe $300\mu m$ x $300\mu m$ (16 x $20\mu m$ = $320\mu m \approx 300\mu m$). Ein Zentimeter der Vorlage könnte also in etwa dreißig nebeneinander bzw. untereinander angeordneter Abtastfelder unterteilt werden. Mit der Einteilung der Vorlage in die Abtastfelder kann also nur ein Auflösungsvermögen der Vorlage von etwa 30 Linien/cm (30L/cm) erreicht werden. Dieses Auflösungsvermögen ist natürlich zu gering, um die Anforderungen hinsichtlich der Schärfe und der Detailwiedergabe der Vorlage zu erfüllen. Um ein größeres Auflösungsvermögen erzielen zu können, wird das Abtastfeld in mehrere kleinere Teilfelder unterteilt. Für die Teilfelder des Abtastfeldes nimmt das Auflösungsvermögen je nach Größe der Teilfelder, in die das Abtastfeld unterteilt ist, zu. Beispielsweise ermöglicht die Aufteilung des Abtastfeldes in vier Teilfelder das doppelte Auflösungsvermögen des Abtastfeldes, eine weitere Unterteilung der einzelnen Teilfelder in vier wiederum gleichgroße Teilfelder bereits das vierfache Auflösungsvermögen, usw. Im Grenzfall kann das Abtastfeld 256-fach unterteilt, d.h. durch 256 Aufzeichnungspunkte wiedergegeben werden, wobei das höchstmögliche Auflösungsvermögen, im beispielhaften Fall 500L/cm, erreicht wird. In diesem Fall würde die Vorlage in $20\mu m$ breiten Linien wiedergegeben werden. Ein 1 cm breiter Streifen der Vorlage würde also durch 500 Linien mit einer Breite von $20\mu m$ auf dem Aufzeichnungsmedium wiedergegeben werden.

Bei dem erfindungsgemäßen Verfahren brauchen keine Fehlerbetrachtungen bzw. -berechnungen durchgeführt zu werden. Ausgehend von den einzelnen Abtastpunkten bzw. den einzelnen kleinsten Teilfeldern werden die pro Abtastfeld (auf das obige Beispiel bezogenen) 256 abtastseitigen Signale mit jeweils 256 Signalstufen, die erforderlich sind, um jedem abtastseitigen Signal (jedem Abtastpunkt) einen Tonwert zwischen 0 und 255 zuzuordnen, in 256 binäre Aufzeichnungssignale transformiert, die entweder "High" oder "Low" sind. Das bedeutet, daß zur Speicherung einer Vorlage als Quasihalbtonbild pro Abtastfeld statt der für die abtastseitigen Signale erforderlichen 256 Bytes (256 x 8 Bits) nur 256 Bits erforderlich sind. Der notwendige Speicherbedarf reduziert sich also um den Faktor 8. Die Feststellung, ob der mittlere Tonwert aus den zu einem Teilfeld gehörenden abtastseitigen Signale größer als der Referenztonwert, beispielsweise größer als der mittlere darstellbare Tonwert ist, kann anhand der in digitaler Form vorliegenden abtastseitigen Signale sehr schnell durchgeführt werden. Anhand des höchstwertigen Bits der Tonwertsumme aus den binärkodierten abtastseitigen Signalen eines Teilfeldes kann festgestellt werden, ob der mittlere Tonwert für das Teilfeld größer als der mittlere darstellbare Tonwert ist. Ist das höchstwertige Bit eine "1", bedeutet dies, daß der Mittelwert größer ist als die größte mit den Stellen der addierten Binärzahlen darstellbaren Zahl geteilt durch 2, d.h. größer ist als die mittlere darstellbare Zahl. Die Mittelwertbildung braucht also nicht vollständig durchgeführt zu werden; es genügt, wenn nur das höchstwertige Bit der Summe betrachtet und der Mittelwert anhand dieses Bits abgeschätzt wird. Unter "Mittelwertbestimmung" ist also auch eine "Mittelwertabschätzung" zu verstehen.

Ein wesentlicher Vorteil des erfindungsgemäßen Verfahrens ist seine Einfachheit, die dementsprechend einfache und schnell arbeitende Ausführungsformen gestattet. Seine Anwendung bietet sich daher zunächst an, wenn eine Bildvorlage "online" und schnell, also z.B. in einem Scanner mit etwa 1 MByte/s maximalem Datentransfer, oder mit sehr hohem, halbtongerechtem Auflösungsvermögen, also beispielsweise 500 L/cm, verarbeitet werden soll. Darüber hinaus bietet sich die Anwendung des erfindungsgemäßen Verfahrens auch an, wenn mit den heute verfügbaren digitalen Übertragungskanälen, z.B. digitaler Kopierer oder Telefax, nicht nur Strich-, Graphik- und Textvorlagen, sondern auch Raster- und Halbtonbilder übertragen werden sollen. Schließlich ist die Anwendung auch für großflächige digitale Anzeigen, z.B. LCD-Displays, an die dieselben Anforderungen gestellt werden, zweckmäßig. Daneben kann das Verfahren auch dazu verwendet werden, Raster- und Strichvorlagen mit geringen Verzerrungen auf binäre Aufzeichnungsträger zu übertragen, insbesondere wenn zum Erfassen der Vorlage eine hochauflösende Abtastvorrichtung verwendet wird und die binären Aufzeichnungspunkte ausreichend klein sind.

In vorteilhafter Weiterbildung des erfindungsgemäßen Verfahrens ist vorgesehen, daß für ein kleinstes Teilfeld als das wiederzugebende Aufzeichnungselement dasjenige Aufzeichnungselement ausgewählt wird, welches dem zu dem kleinsten Teilfeld gehörenden Abtastelement mit dem größten Tonwert zugeordnet ist, und für ein Teilfeld höherer Ordnung dasjenige Aufzeichnungselement ausgewählt wird, welches dem Abtastelement des zu dem untersuchten Teilfeld gehörenden Teilfeldes nächstniedriger Ordnung mit der größten Tonwertsumme zugeordnet ist, wobei die Position des wiederzugebenden Aufzeichnungselementes jeweils zufällig bestimmt wird, wenn die Tonwerte bzw. die Tonwertsummen untereinander gleich groß sind. Ist der Mittelwert der Tonwerte der zu einem kleinsten Teilfeld gehörenden Abtastpunkte größer als der Referenztonwert, wird als zu druckender Aufzeichnungspunkt derjenige Aufzeichnungspunkt bestimmt, der dem Abtastpunkt mit dem größten Tonwert zugeordnet ist. Damit wird erreicht, daß genau derjenige Aufzeichnungspunkt gedruckt wird, dessen Position innerhalb des aufgezeichneten Bildes dem am stärksten eingefärbten Abtastpunkt des betrachteten kleinsten Teilfeldes entspricht. Genauso wird auch bei Betrachtung der Teilfelder höherer Ordnung verfahren, die jeweils aus mehreren Teilfeldern nächst niedrigerer Ordnung zusammengesetzt sind. Ist der Mittelwert sämtlicher zum betrachteten Teilfeld höherer Ordnung gehörender Abtastpunkte größer als der Referenztonwert, wird als zu druckender Aufzeichnungspunkt ein Aufzeichnungspunkt bestimmt, der demjenigen Teilfeld nächstniedrigerer Ordnung zugeordnet ist, dessen Abtastpunkte bei Summation ihrer Tonwerte die größte Tonwertsumme aufweisen. Wenn also ein Aufzeichnungspunkt für ein Teilfeld höherer Ordnung gedruckt wird, wird er in dem Bereich gedruckt, in dem das Teilfeld am stärksten eingefärbt ist. Sind die Tonwerte sämtlicher einem kleinsten Teilfeld bzw. einem Teilfelder höherer Ordnung zugeordneter Abtastpunkte einander gleich und größer als der Referenztonwert, so erfolgt die Auswahl des zu druckenden Aufzeichnungspunktes von einem Zufallsgenerator gesteuert.

Ist für ein kleinstes Teilfeld kein Aufzeichnungspunkt zu drucken, weil der mittlere Tonwert der zugeordneten Abtastpunkte kleiner als der Referenztonwert ist, wird die Position desjenigen Aufzeichnungspunktes, der dem Abtastpunkt mit dem größten Tonwert entspricht, als Position eines eventuell später zu druckenden Aufzeichnungspunktes gespeichert. Ist für ein Teilfeld nächsthöherer Ordnung, zu dem das obige zuvor betrachtete kleinste Teilfeld gehört, ein Aufzeichnungspunkt zu drucken, und zwar in dem Bereich, der dem kleinsten Teilfeld entspricht, so wird genau der Aufzeichnungspunkt gedruckt, dessen Position zuvor gespeichert worden ist. Das Verfahren nach dieser Weiterbildung der Erfindung erfordert einen gewissen Datenverwaltungs- und Speicheraufwand, da die Positionen der zu druckenden Aufzeichnungspunkte durch Vergleich mit dem Tonwert oder den Tonwertsummen der einzelnen Aufzeichnungspunkte bzw. Gruppen von Aufzeichnungspunkten bestimmt und die Positionen der (eventuell später) zu druckenden Aufzeichnungspunkte gespeichert werden. Durch das oben beschriebene Verfahren wird aber das Bild mit noch höherer Detailgenauigkeit wiedergegeben.

Zweckmäßigerweise wird bei einem gleichmäßig stark eingefärbten Abtastfeld die Auswahl der zu druckenden Aufzeichnungspunkte zufällig gewählt, indem geringe Unterschiede zwischen den an sich gleichgroßen Tonwerten der Abtastpunkte erzeugt werden. Auf diese Weise kann, um die Position der potentiell zu druckenden Aufzeichnungspunkte festzulegen, wieder nach der oben beschriebenen Weiterbildung des erfindungsgemäßen Verfahrens vorgegangen werden.

Um den Aufwand in Bezug auf die Datenverwaltung zu reduzieren, wird die Position der in Abhängigkeit von den Beträgen der Mittelwerte zu druckenden Aufzeichnungselemente innerhalb der Teilfelder gleicher Ordnung in einer Zufallsauswahl bestimmt. Hierbei sind innerhalb von Teilfeldern gleicher Ordnung die Positionen der potentiell zu druckenden Aufzeichnungspunkte unterschiedlich und im voraus bestimmt. Auf diese Weise wird vermieden, daß bei der Wiedergabe von gleichfarbigen Flächen sich wiederholende (Aufzeichnungs-) Punktmuster entstehen. Eine Festlegung der Aufzeichnungspunkte in Abhängigkeit von der Größe der Tonwerte der einzelnen Abtastelemente erfolgt hierbei nicht, weshalb ein geringerer Aufwand in Bezug auf die Speicherung der Positionen der potentiell zu druckenden Aufzeichnungspunkte erforderlich ist. Demzufolge kann das Bild schneller aufgezeichnet werden, wobei ein geringer Schärfeverlust in Kauf zu nehmen ist.

Eine vorteilhafte Ausbildung der Erfindung besteht darin, daß zur Aufzeichnung der Vorlage mit einer Tonwertabstufung, die gröber als diejenige der Vorlage ist, die in Abhängigkeit von den mittleren Tonwerten der Abtastelemente zu druckenden Aufzeichnungselemente nur für solche Teilfelder gedruckt werden, deren Anzahl an Abtast- bzw. Aufzeichnungselementen größer oder gleich der zur Darstellung der Vorlage mit der gewünschten Tonwertabstufung erforderlichen Anzahl ist. Wenn die Tonwertabstufung in der Wiedergabe nicht so fein zu sein braucht, wie diejenige der Vorlage, dann brauchen die Teilfelder erst ab einer bestimmten Mindestgröße daraufhin untersucht zu werden, ob in Abhängigkeit von dem mittleren Tonwert des Teilfeldes ein Aufzeichnungspunkt zu drucken ist. Soll eine Vorlage beispielsweise statt mit der 256 Stufen umfassenden Tonwertskala nur mit einer 16 Stufen umfassenden Tonwertskala wiedergegeben werden, so werden zur Bestimmung der Anzahl und der Lage der zu druckenden Aufzeichnungspunkte nur Teilfelder (Datenblöcke) betrachtet, die mindestens so groß wie 16 Abtast- bzw. Aufzeichnungspunkte sind (die mindestens 16 Tonwertdaten umfassen). Hierdurch steigt die Verarbeitungsgeschwindigkeit des Quasihalbtonbildes.

Durch diese Maßnahme läßt sich das Verfahren besonders einfach durchführen. Im Hinblick auf die bei der Bildverarbeitung bevorzugt eingesetzte Digitaltechnik ist es besonders zweckmäßig, die Unterteilung des Abtastfeldes mittels digitalwertiger Schritte vorzunehmen, d.h. die Tonwertdaten für die Abtastpunkte des Abtastfeldes zunächst in zwei gleichgroße erste Blöcke, diese beiden ersten Blöcke dann in zwei gleichgroße zweite Blöcke (es liegen dann vier Datenblöcke gleicher Größe vor) usw. zu zerlegen. Die Unterteilung in jeweils gleichviele und gleichgroße Datenblöcke wirkt sich auch vorteilhaft auf die Datenverwaltung und die Zuordnung der Daten zu den einzelnen Datenblöcken aus.

Vorteilhafterweise entspricht die Größe der kleinsten Teilfelder der Vorlage, d.h. die Anzahl der zu einem kleinsten Datenblock zusammengefaßten Tonwerte dem Verhältnis aus Aufzeichnungs- zu Abtastfeinheit bzw. -auflösung. Die kleinsten Teilfelder haben die Größe zweier Aufzeichnungspunkte, wenn die Aufzeichnungsfeinheit größer als oder genauso groß wie die Abtastfeinheit ist bzw. gewählt wird. Ein Verhältnis von "1" besagt, daß einem Abtastpunkt der Vorlage auch ein Aufzeichnungspunkt in der Wiedergabe entspricht. Davon zu unterscheiden ist das Vergrößerungsverhältnis zwischen Vorlage und Wiedergabe, das hier nicht betrachtet wird. Ein Verhältnis von "2" würde also bedeuten, daß ein Abtastpunkt durch vier Aufzeichnungspunkte dargestellt wird. Für diejenigen Teilfelder, die kleiner als oder genauso groß wie ein Abtastpunkt sind, wird der Tonwert des Abtastpunktes, in dem das Teilfeld liegt, als Mittelwert genommen. Hier entfällt also eine gesonderte Mittelwertberechnung. Bei einem Verhältnis von "2" wären also die Mittelwerte von zwei benachbarten kleinsten Teilfeldern gleich dem Tonwert des Abtastpunktes, in dem die beiden kleinsten Teilfelder liegen.

Es kann durchaus vorteilhaft sein, feiner aufzuzeichnen als abzutasten. Die geringere Abtastfeinheit hat den Vorteil, daß bei noch ausreichender Schärfe weniger Tonwertdaten anfallen. Die höhere Aufzeichnungsfeinheit hat den Vorteil, daß das aufgezeichnete Bild eine geringe Körnigkeit aufweist, wodurch es ruhiger wirkt und besser betrachtet werden kann. Insgesamt werden weniger Addierschritte je Matrix benötigt, da für die mittleren Tonwerte derjenigen Teilfelder, die kleiner als oder genauso groß wie ein Abtastpunkt sind, keine Mittelwertbildung (also Summenbildung) erforderlich ist. Bei einer $\sqrt{2}$ feineren Aufzeichnung als Abtastung kann bereits anhand des höchstwertigen Bits des digitalisierten Tonwerts jedes Abtastpunktes, der durch zwei Aufzeichnungspunkte wiedergegeben wird und gleich der Größe der kleinsten Teilfelder ist, bestimmt werden, ob einer der beiden Aufzeichnungspunkte zu drucken ist. In diesem Fall würden also ca. 50% weniger Addierschritte je Abtastfeld erforderlich sein. Bei einer zweifach feineren Aufzeichnung als Abtastung könnten sogar 75% der Addierschritte je Abtastfeld eingespart werden, da anhand der höchstwertigen Bits des digitalisierten Tonwerts eines Abtastpunktes festgestellt werden kann, ob ein Aufzeichnungspunkt in einem kleinsten Teilfeld zu drucken ist, während anhand des zweithöchstwertigen Bits des digitalisierten Tonwertes festgestellt werden kann, ob ein Aufzeichnungspunkt in einem nächstgrößeren Teilfeld zu drucken ist.

Vorteilhafterweise sind die Abtast- und die Aufzeichnungspunkte jeweils orthogonal angeordnet. Das Abtastfeld kann bei einer derartigen Anordnung der Abtastpunkte auf einfache Weise in einzelne Teilfelder unterteilt werden, wobei die einzelnen Abtastpunkte sehr einfach den einzelnen Teilfeldern zugeordnet werden können. Damit ist auch eine einfache Zuordnung der einzelnen Tonwertdaten zu den verschiedenen und unterschiedlich großen Datenblöcken gegeben, wodurch sich die Datenverwaltung vereinfacht.

Vorzugsweise sind die Abtast- und die Aufzeichnungspunkte jeweils hexagonal angeordnet. Bei diesem Ordnungsschema der Abtast- bzw. Aufzeichnungspunkte weist ein Abtast- bzw. Aufzeichnungspunkt sechs sogenannte nächste Nachbarpunkte auf, d.h. die Abtast- oder Aufzeichnungspunkte einer Reihe sind jeweils "auf Lücke" zwischen den Abtast- bzw. Aufzeichnungspunkten der benachbarten Reihen angeordnet. Die Zeilen bzw. Spalten einer solchen Matrix sind demzufolge abwechselnd gegeneinander verschoben. Durch ein derartiges Ordnungsschema kann einerseits die Vorlage wesentlich exakter abgetastet und andererseits das Bild wesentlich exakter aufgezeichnet werden, da die Größe der Zwischenräume zwischen den einzelnen Abtast- bzw. Aufzeichnungspunkten infolge der "hohen Packungsdichte" der Abtast- und Aufzeichnungspunkte, die jeweils eine Kreisfläche aufweisen, minimiert ist. Dieses hexagonale Ordnungsschema ist insbesondere bei kleinen Abtast- und Aufzeichnungspunkten vorteilhaft.

Das erfindungsgemäße Verfahren kann nicht nur zum Aufzeichnen von einfarbigen, sondern auch zum Aufzeichnen von mehrfarbigen Quasihalbtonbildern, die sich aus mehreren additiven oder subtraktiven Grundfarben zusammensetzen, verwendet werden. Hierbei wird das oben beschriebene Verfahren für jede der Grundfarben durchgeführt und die dabei entstehenden Einfarben-Quasihalbtonbilder anschließend überlagert. Für jede additive bzw. subtraktive Grundfarbe wird jedem Abtastpunkt beim Abtasten ein bestimmter Tonwert der Grundfarbe zugeordnet. Bei der anschließenden Unterteilung eines Abtastfeldes wird jeweils der mittlere Tonwert der betreffenden Grundfarbe des entstandenen Teilfeldes in der oben beschriebenen Weise ermittelt bzw. berechnet. Die einzelnen Aufzeichnungspunkte können entweder voll mit der entsprechenden additiven bzw. subtraktiven Grundfarbe eingefärbt oder gar nicht eingefärbt sein. Bei der Mehrfarben-Bildaufzeichnung mit Hilfe dieses Verfahrens können auch die bekannten Techniken zur Vermeidung von Moiré-Erscheinungen angewendet werden.

Die Erfindung betrifft darüber hinaus eine Vorrichtung zur Umwandlung von Bildpunkt-Tonwerten, mit einer Verarbeitungseinheit, die die Tonwerte einzelner Abtastbildpunkte einer Vorlage, welche in mehrere Abtastfelder mit jeweils mehreren Abtastbildpunkten unterteilt ist, in Aufzeichnungsbildpunktdaten umrechnet, die entweder dem Farbwert "Voll" oder "Null" entsprechen, wobei einem oder mehreren Abtastbildpunkten ein oder mehrere Aufzeichnungsbildpunkte zugeordnet sind. Eine solche Vorrichtung ist aus EP-A 0 132 453 bekannt, wobei die Bildpunkt-Tonwert-Umrechnung von der Verarbeitungseinheit durchgeführt wird, die in Form eines Rechners vorliegt.

Diese Vorrichtung ist erfindungsgemäß gekennzeichnet durch

- ein Eingangsumschaltnetzwerk, das für jedes Abtastfeld die Tonwerte der zugehörigen Abtastbildpunkte empfängt und die Tonwerte zu Datenblöcken zusammenfaßt, die Abtastbildpunkten entsprechen, welche zu bei Unterteilung des Abtastfeldes entstehenden ineinandergeschachtelten Teilfeldern des Abtastfelds gehören,
- einen mit dem Eingangsumschaltnetzwerk verbundenen Arithmetik-Prozessor, der für jeden einem kleinsten Teilfeld des Abtastfelds zugeordnete Tonwert-Datenblock ein Ausgangssignal ausgibt, das anzeigt, ob die Summe der Tonwerte des Datenblocks größer ist als ein vorgebbarer Referenzwert, und der für jeden einem Teilfeld höherer Ordnung des Abtastfeldes zugeordneten Tonwert-Datenblock ein Ausgangssignal ausgibt, das anzeigt, ob die Summe aus den Tonwerten der zu dem betrachteten Teilfeld höherer Ordnung gehörenden Abtastelements abzüglich eines dem maximalen Tonwert entsprechenden Tonwertes für jedes Aufzeichnungselement, das einem der dem betrachteten Teilfeld zugeordneten Teilfelder niedrigerer Ordnung bzw. Ordnungen zugeordnet ist und zuvor als wiederzugebendes Aufzeichnungselement ermittelt worden ist, größer ist als der vorgebbare Referenztonwert, und
- ein mit dem Ausgang des Arithmetik-Prozessor verbundenes Ausgangsumschaltnetzwerk, das für jedes pro Datenblock von dem Arithmetik-Prozessor ausgegebenes Ausgangssignal einem der Aufzeichnungsbildpunkte, die dem diesem Datenblock entsprechenden Teilfeld des Abtastfeldes zugeordnet sind, den Farbwert "Voll" zuordnet und ein diesen Zustand anzeigendes Ausgangssignal ausgibt, wobei die potentiell mit dem Farbwert "Voll" wiederzugebenden Aufzeichnungsbildpunkte derart angeordnet sind, daß jeder Aufzeichnungsbildpunkt höchstens einmal wiedergegeben wird.

An den Eingangsleitungen des Eingangsumschaltnetzwerks stehen jeweils sämtliche Bildpunkt-Tonwertdaten für ein Abtastfeld an. Die Reihenfolge, in der die Bildpunkt-Tonwertdaten an den Eingangsleitungen anliegen, wird in dem Eingangsumschaltnetzwerk vertauscht, so daß die Tonwertdaten zu kleinsten Datenblöcken zusammengefaßt, die kleinsten Datenblöcke zu übergeordneten nächstgrößeren Datenblöcken zusammengefaßt usw. an den Ausgangsleitungen des Eingangsumschaltnetzwerks anliegen. In dem Eingangsumschaltnetzwerk erfolgt also eine Umgruppierung der Tonwertdaten in die einzelnen Datenblöcke. Diese Umgruppierung entspricht der Aufteilung des Abtastfeldes in die kleinsten Teilfelder und in übergeordnete Teilfelder verschiedener Größe. Die Ausgänge des Eingangsumschaltnetzwerks sind mit den Eingängen eines Arithmetik-Prozessors verbunden, der aus den einzelnen Tonwertdaten die mittleren Tonwerte für die betreffenden Datenblöcke ermittelt bzw. abschätzt. Der Arithmetik-Prozessor gibt für jeden Datenblock ein binäres Ausgangssignal aus, das beispielsweise "High" ist, wenn der mittlere Tonwert eines Datenblocks größer als ein vorgegebener Referenzwert ist, und "Low" ist, wenn der mittlere Tonwert eines Datenblocks kleiner oder gleich dem vorgegebenen Referenzwert ist. Der Arithmetik-Prozessor empfängt also den Tonwert jedes Abtastpunktes eines Abtastfeldes in Form eines binärkodierten Signals und gibt für jeden Datenblock, d.h. für jeden kleinsten Datenblock, für jeden sich aus den kleinsten Datenblöcken zusammensetzenden nächstgrößeren Datenblock usw. ein binäres Ausgangssignal aus. Die Ausgangssignale des Arithmetik-Prozessors werden als Eingangssignale in das Ausgangsumschaltnetzwerk gegeben. Das Ausgangsumschaltnetzwerk bestimmt anhand seiner Eingangssignale, welcher Aufzeichnungspunkt pro Teilfeld gedruckt wird, wenn das Ausgangssignal des Arithmetik-Prozessors für den dem Teilfeld entsprechenden Datenblock "High" ist. Das Ausgangsumschaltnetzwerk gibt für jeden Aufzeichnungspunkt des Abtastfeldes ein binäres Signal aus, das entweder "High" (beispielsweise für einen zu druckenden Punkt) oder "Low" (für einen nicht zu druckenden Punkt) ist. Die erfindungsgemäße Bildpunkt-Tonwertdaten-Verarbeitungsvorrichtung transformiert also die binärkodierten Tonwerte der einzelnen Abtastpunkte eines Abtastfeldes in binäre Signale, die entweder den Zustand "High" oder "Low" annehmen können und angeben, ob ein Aufzeichnungspunkt einzufärben ist oder nicht. Die gesamte Verarbeitung erfolgt digital und kann parallel und damit sehr schnell ausgeführt werden.

Bei einer vorteilhaften Weiterbildung der Erfindung weist der Arithmetik-Prozessor ein mehrstufiges Netzwerk aus zusammengeschalteten Addierern mit Übertragausgang aufweist, wobei in der untersten Stufe soviele Addierer wie kleinste Datenblöcke vorgesehen sind und jeder Addierer der untersten Stufe die Tonwertdaten der zu einem kleinsten Datenblock gehörenden Bildpunkt addiert. Die Ausgänge der Addierer einer Stufe sind mit den Eingängen der Addierer der nächsthöheren Stufe verbunden, während die Übertragausgänge der Addierer jeder Stufe die Ausgänge des Arithmetik-Prozessors sind. Hierbei ist der Arithmetik-Prozessor als ein mehrstufiges Netzwerk aus Addierern mit Übertragausgang realisiert. Die Übertragausgänge der Addierer einer Stufe stellen die Ausgänge des Arithmetik-Prozessors der entsprechenden Datenblöcke dar. So sind die Übertragausgänge der Addierer der untersten Stufe, die jeweils die Tonwertdaten der kleinsten Datenblöcke addieren, die Ausgänge für die kleinsten Datenblöcke. Der gesamte Arithmetik-Prozessor ist übersichtlich aufgebaut und besteht aus handelsüblichen Elementen, weshalb er kostengünstig hergestellt werden kann.

Vorteilhafterweise werden das Eingangs- und das Ausgangsumschaltnetzwerk von einer programmierbaren Steuereinheit gesteuert. Dabei ist das Eingangsumschaltnetzwerk derart gesteuert, daß die Bildpunkt-Tonwertdaten von den Eingängen des Eingangsumschaltnetzwerks entsprechend der Unterteilung in Datenblöcke auf die Ausgänge des Eingangsumschaltnetzwerks geschaltet sind. Zusätzlich steuert die Steuereinheit in dem Ausgangsumschaltnetzwerk die Weiterleitung der Eingangssignale auf die Ausgangsleitungen.

Bei einer bevorzugten Ausgestaltung der Erfindung ist die Art der Zusammenfassung der Bildpunkt-Tonwertdaten zu Datenblöcken und die Art der Verteilung der Aufzeichnungsbildpunkte in einem mit der Steuereinheit verbundenen Speicher gespeichert, wobei in dem Speicher mehrere verschiedene Zusammenfassungs- und Verteilungsmuster gespeichert sind. In dem Speicher sind also mindestens ein Ansteuerungsmuster für das Eingangs- und eines für das Ausgangsumschaltnetzwerk gespeichert. Sind mehrerer solcher Ansteuerungsmuster für beide Netzwerke gespeichert, kann einerseits die Aufteilung der Tonwertdaten eines Abtastfeldes in Datenblöcke und andererseits die Verteilung der pro Datenblock zu druckenden Aufzeichnungspunkte von Abtastfeld zu Abtastfeld variiert werden.

Bei einer vorteilhaften Weiterbildung der Erfindung ist vorgesehen, daß an den Eingängen des Eingangsumschaltnetzwerks jeweils die Bildpunkt-Tonwertdaten eines Abtastfeldes, das in einer Matrix mit $2^n$ Zeilen und $2^n$ Spalten angeordnete Bildpunkte umfaßt, anliegen, wobei n eine natürliche Zahl ist und die Tonwerte der Bildpunkte als binäre Zahl mit 2n Stellen vorliegen, und daß die Addierer des Arithmetik-Prozessors Digitaladdierer zum Addieren von 2n-stelligen binären Zahlen sind. Wenn eine digitalwertige Anzahl von Abtastpunkten zu jeweils einem Abtastfeld zusammengefaßt wird, d.h., daß eine digitalwertige Anzahl von Bildpunkt-Tonwertdaten zu einem (Haupt-)Datenblock zusammengefaßt und dem Eingangsumschaltnetzwerk zugeführt wird, so ergibt sich in dem Arithmetik-Prozessor eine besonders einfache Abschätzung des Betrages des Mittelwerts der zu den jeweiligen kleineren Datenblöcken gehörenden Tonwertdaten. Der Mittelwert kann nämlich anhand der höchstwertigen Bits am Ausgang der Digitaladdierer, d.h. anhand der Übertragbits der Digitaladdierer abgeschätzt werden. Eine echte Mittelwertberechnung ist dabei nicht erforderlich. Dadurch wird Rechenzeit eingespart.

Die Anzahl der Übertragausgänge jedes Addierers entspricht dabei der Anzahl der Bildpunkt-Tonwertdaten pro kleinstem Datenblock bzw. der Anzahl der zu einem übergeordneten Datenblock gehörenden untergeordneten Datenblöcke.

Vorteilhafterweise ist der Arithmetik-Prozessor derart ansteuerbar, daß, wenn die Aufzeichnungsfeinheit größer als die Abtastfeinheit ist, die Eingangsleitungen des Arithmetik-Prozessors für die Bildpunkt-Tonwertdaten mit den Eingängen der Addierer höherer Stufen verbindbar sind, wobei zusätzlich die Eingangsleitungen des Arithmetik-Prozessors für die höchstwertigen Bits der Bildpunkt-Tonwertdaten mit den Ausgängen des Arithmetik-Prozessors verbindbar sind. Ist die Aufzeichnungsfeinheit größer als die Abtastfeinheit, kann die Mittelwertberechnung für die kleinsten bzw. kleineren Datenblöcke durch die Untersuchung der höchstwertigen Bits der Bildpunkt-Tonwertdaten der kleinsten bzw. kleineren Datenblöcke ersetzt werden. Die höchstwertigen Bits werden dann direkt an die Ausgänge des Arithmetik-Prozessors für die betreffenden Datenblöcke belegt.

Bei einer $\sqrt{2}$-mal größeren Aufzeichnungsfeinheit als Abtastfeinheit sind die Eingangsleitungen des Arithmetik-Prozessors für die Bildpunkt-Tonwertdaten mit den Eingängen der Addierer der zweiten Stufe und zusätzlich die Eingangsleitung des Arithmetik-Prozessors für das jeweils höchstwertige Bit der Bildpunkt-Tonwertdaten mit den Ausgängen des Arithmetik-Prozessors verbunden. Bei einer 2-mal größeren Aufzeichnungsfeinheit als Abtastfeinheit sind die Eingangsleitungen des Arithmetik-Prozessors für die Bildpunkt-Tonwertdaten mit den Eingängen der Addierer der dritten Stufe und die Eingangsleitungen des Arithmetik-Prozessors für die jeweils höchstwertigen Bits mit den Ausgängen des Arithmetik-Prozessors für die kleinsten Datenblöcke und die Eingangsleitungen des Arithmetik-Prozessors für die jeweils zweithöchstwertigen Bits mit den Ausgängen des Arithmetik-Prozessors für die den kleinsten Datenblöcken übergeordneten Datenblöcke verbunden.

Die kleinsten Datenblöcke, in die die Eingangssignale des Eingangsumschaltnetzwerks zusammengefaßt werden, umfassen jeweils zwei Tonwertdaten, wenn die Aufzeichnungsfeinheit größer als oder genauso groß wie die Abtastfeinheit ist. Das Eingangsumschaltnetzwerk ist dabei derart angesteuert, daß jeder Eingang des Eingangsumschaltnetzwerks für ein Tonwertdatensignal mit einer dem Verhältnis aus Aufzeichnungs- zu Abtastfeinheit entsprechenden Anzahl von Ausgängen des Eingangsumschaltnetzwerks verbunden ist. Bei Variation des Verhältnisses aus Aufzeichnungs- zu Abtastfeinheit braucht also nicht, wie bei der obigen Variante, der Arithmetik-Prozessor umgeschaltet zu werden; die Umschaltungen erfolgen vielmehr schon in dem Eingangsumschaltnetzwerk, und zwar derart, daß an die Eingängen des Arithmetik-Prozessors die pro Datenblock zu verarbeitenden Tonwertdatensignale richtig gruppiert anliegen.

Bei einem Verhältnis von $\sqrt{2}$ ist ein Eingang des Eingangsumschaltnetzwerks, an dem ein Tonwertdatensignal anliegt, mit zwei Ausgängen des Eingangsumschaltnetzwerks verbunden. Diese beiden Ausgangssignale stellen die Tonwertdaten für einen kleinsten Datenblock dar. Bei einem Verhältnis von "2" ist ein Eingang des Eingangsumschaltnetzwerks, an dem ein Tonwertdatensignal anliegt, mit vier Ausgängen des Eingangsumschaltnetzwerks verbunden. Diese vier Ausgangssignale entsprechen zwei kleinsten Datenblöcken mit jeweils zwei Tonwertdaten. Durch entsprechende Ansteuerungen des Eingangsumschaltnetzwerks können die binärkodierten Tonwertdaten der Abtastpunkte der Vorlage bei jedem Verhältnis aus Aufzeichnungs- zu Abtastfeinheit in die dazugehörigen binären Signale, die nur den Zustand "High" oder "Low" annehmen können, transformiert werden.

Nachfolgend werden unter Bezugnahme auf die Figuren Ausführungsbeispiele der Erfindung näher erläutert. Im einzelnen zeigen:

Fign. 1a bis 1i     ein Beispiel für die Aufteilung eines Abtastfeldes in einzelne Teilfelder, d.h. die Unterteilung des die Tonwerte der einzelnen Abtastpunkte eines Abtastfeldes enthaltenden (Haupt-)Datenblocks in die einzelnen Teildatenblöcke,

Fign. 2a bis 2i     diejenigen Aufzeichnungspunkte, die in Abhängigkeit von dem Betrag des Mittelwerts der Tonwerte der einzelnen Teilfelder gedruckt werden,

Fign. 3a bis 3f     ein Beispiel für die Aufzeichnung einer zweidimensionalen Vorlage, wenn die Abtastfeinheit gleich der Aufzeichnungsfeinheit ist,

Fign. 4a bis 4f     ein Beispiel für die Aufzeichnung einer zweidimensionalen Vorlage gemäß einem modifizierten Verfahren,

Fign. 5a bis 5f     Beispiele für die Aufzeichnung einer zweidimensionalen Vorlage, wenn die Aufzeichnungsfeinheit $\sqrt{2}$-mal bzw. 2 mal größer als die Abtastfeinheit ist,

Fig. 6     das Blockschaltbild der Vorrichtung zur Umwandlung von Bildpunkt-Tonwerten in binäre Datensignale,

Fig. 7     den Aufbau des Arithmetik-Prozessors der Fig. 6,

Fign. 8a bis 8e     ein Beispiel für die Aufteilung und die Verteilung der zu druckenden Aufzeichnungspunkte bei einem 4 x 4-Abtastpunkte umfassenden Abtastfeld,

Fig. 9     ein Beispiel zur Erläuterung der Arbeitsweise der in Fig. 6 dargestellten Vorrichtung und des in Fig. 7 dargestellten Arithmetik-Prozessors und

Fig. 10 die im Fall des Beispiels nach den Figuren 8 und 9 an den Addierern sowie den Ein- und den Ausgängen des Arithmetik-Prozessors anstehenden digitalen Signalen.

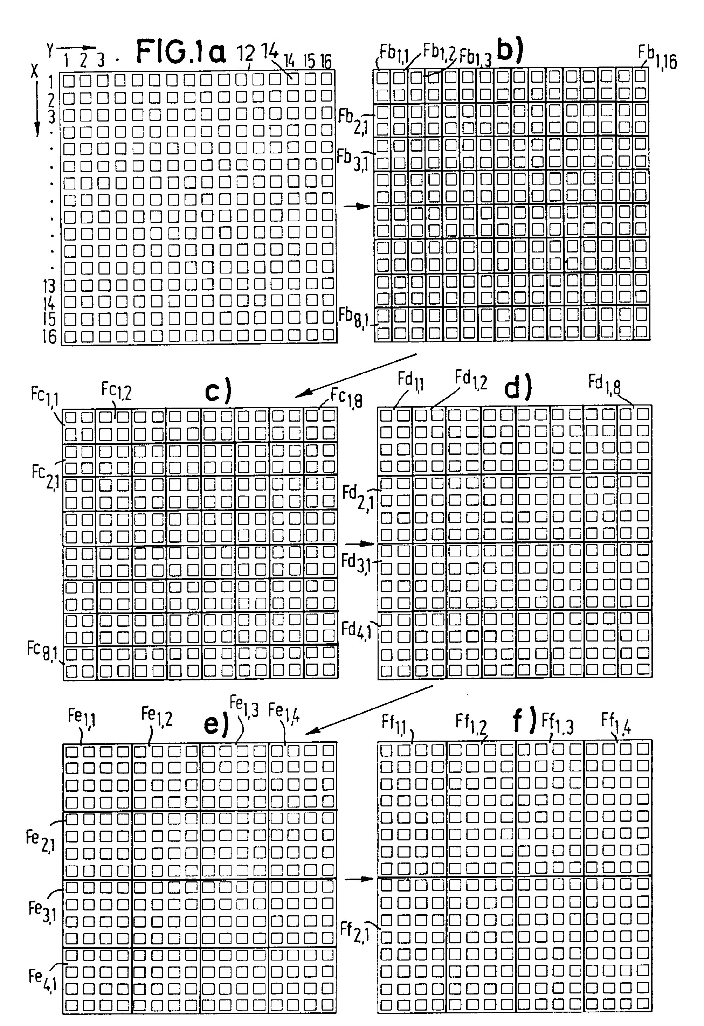

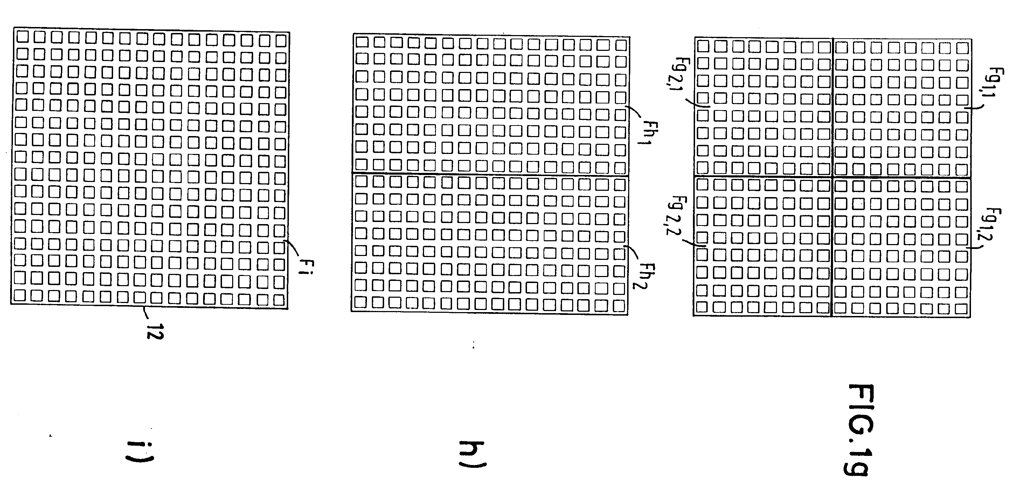

In den Fign. 1a bis 1i sind die einzelnen Unterteilungsschritte zum Aufzeichnen einer zweidimensionalen Vorlage für den Fall dargestellt, daß die Abtastauflösung gleich der Aufzeichnungsauflösung ist. Das bedeutet, daß ein Abtastpunkt der Vorlage durch einen Aufzeichnungspunkt auf dem Aufzeichnungsmedium wiedergegeben wird. Der Übersichtlichkeit wegen sind die Abtast- und Aufzeichnungspunkte jeweils durch quadratische mit Abstand zueinander angeordnete Felder dargestellt. Tatsächlich haben die Abtast- und die Aufzeichnungspunkte eine Kreisfläche. Weiterhin sei der Einfachheit halber angenommen, daß es sich bei der aufzuzeichnenden Vorlage um ein Schwarz-Weiß-Bild handelt. In diesem Fall entspricht der Tonwert eines Abtastpunktes einem bestimmten Grauton (Graustufe) zwischen den "Grauwerten" Schwarz und Weiß.

Die aufzuzeichnende Vorlage wird in einer Abtastvorrichtung, wie z.B. einem Scanner, einer elektronischen Kamera, bei denen die abtastseitigen Bildsignale (die Signale für die einzelnen Abtastpunkte) einen ausreichenden Signal/Rausch-Abstand aufweisen (z.B. $\geqq 100{:}1$ in Spannungsamplituden) zeilenweise abgetastet. Das von der Abtastvorrichtung für jeden Abtastpunkt erzeugte Signal repräsentiert den (analogen) Tonwert des betreffenden Abtastpunktes. Diese Signale werden in einem Analog/Digital-Wandler digitalisiert und anschließend abgespeichert, so daß sie während des gesamten Verfahrens jederzeit verfügbar sind. Die weiteren Berechnungen erfolgen in einem Rechner. Die Vorlage wird auf dem Aufzeichnungsmedium einer Aufzeichnungsvorrichtung, beispielsweise auf einem Blatt Papier, einer Druckplatte oder einem Bildschirm, durch einzelne Punkte (Aufzeichnungspunkte) wiedergegeben bzw. dargestellt. Die Aufzeichnungsvorrichtung erhält die zum Aufzeichnen erforderlichen Signale von dem Rechner.

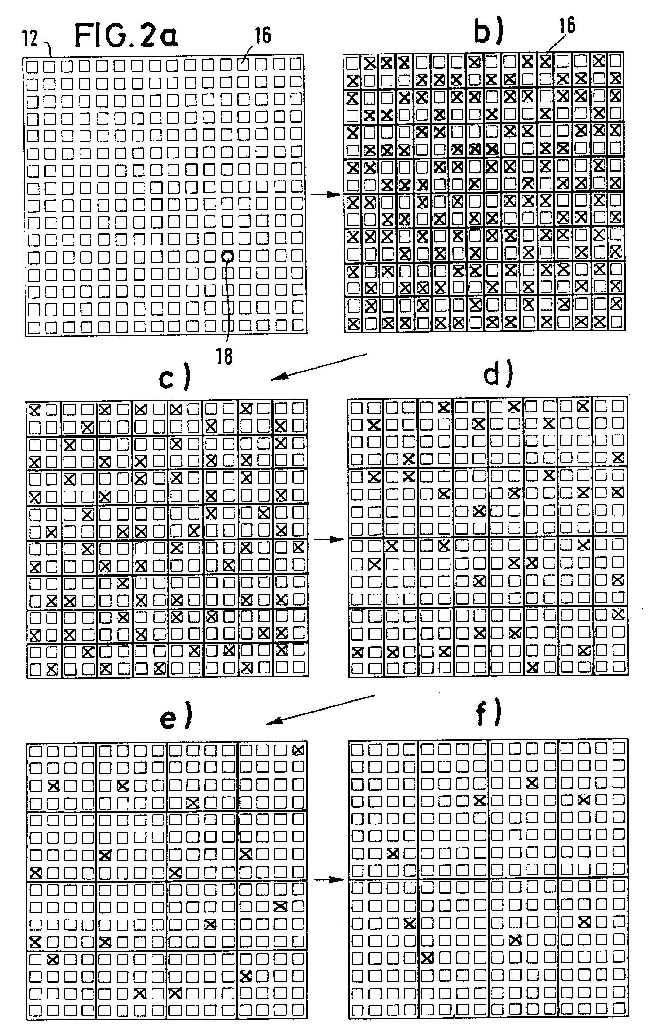

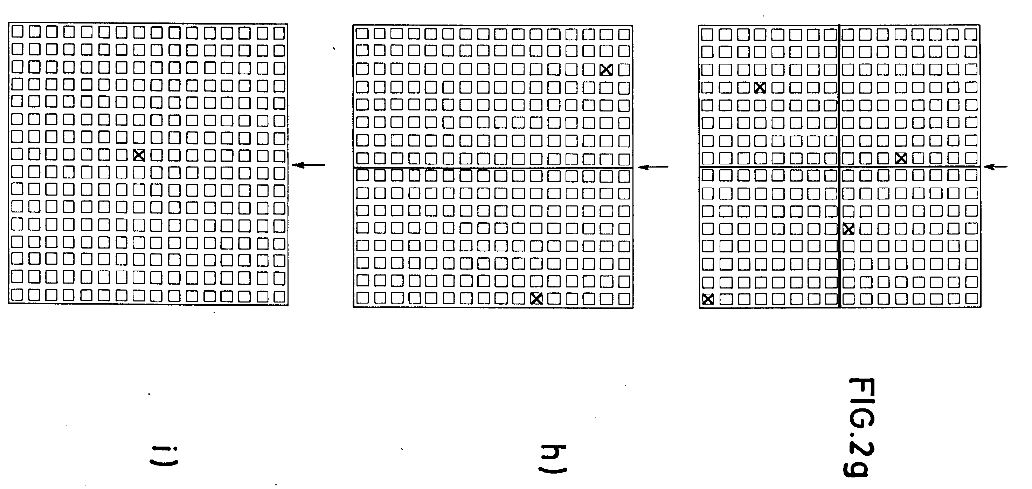

Die Vorlage wird zunächst gemäß Fig. 1 in Abtastfelder 12 unterteilt, die jeweils aus mehreren matrixförmig angeordneten Abtastpunkten 14 bestehen. In Fig. 1a sind die Koordinatenachsen X und Y, anhand derer die Position eines Abtastpunktes 14 in der Matrix angegeben wird, eingezeichnet. Das gleiche Koordinatensystem gilt auch für die Matrix der Aufzeichnungspunkte 16 (Fig. 2). Bei der Wiedergabe der Vorlage auf dem Aufzeichnungsmedium, also bei der Kopie der Vorlage, ist darauf zu achten, daß der mittlere Tonwert eines Abtastfeldes (d.h. der Mittelwert der Tonwerte sämtlicher Abtastpunkte 14 eines Abtastfeldes 12) so genau wie möglich durch die Aufzeichnungspunkte wiedergegeben wird. Wie bereits einleitend erwähnt, sind von dem menschlichen Auge ca. 150 Tonwertstufen (Graustufen) visuell unterscheidbar, so daß zu ihrer Darstellung jedes Abtastfeld 12 der Vorlage durch mindestens 150 gleichgroße Aufzeichnungspunkte auf dem Aufzeichnungsmedium darzustellen ist. Ein einzelner Aufzeichnungspunkt kann nur den Farbwert "Voll", also schwarz, oder den Farbwert "Null", also weiß, annehmen. Durch Variation der Anzahl der eingefärbten Aufzeichnungspunkte innerhalb eines mindestens 150 Aufzeichnungspunkte umfassenden Bereiches können die verschiedenen Grauwertstufen zwischen weiß und schwarz realisiert werden.

Die bei der Bildverarbeitung heute übliche Digitaltechnik legt es nahe, die Grauskala in 256 Stufen zu unterteilen. Die 256 Graustufen können auf dem Aufzeichnungsmedium durch 256 Aufzeichnungspunkte 16, die in einer 16 Zeilen und 16 Spalten aufweisenden Matrix angeordnet sind, dargestellt werden. D.h., daß ein Abtastfeld 12 der Vorlage auf dem Aufzeichnungsmedium durch 256 in einer Matrix angeordnete Aufzeichnungspunkte wiedergegeben wird. Der mittlere Tonwert eines Abtastfeldes 12 kann also mit einer Genauigkeit von $1/256 = 1/2^{-8}$ praktisch exakt wiedergegeben werden.

Zur Ermittlung des mittleren Tonwertes eines Abtastfeldes 12 wird das von der Abtastvorrichtung für jeden Abtastpunkt gelieferte analoge Signal, das den (analogen) Tonwert des betreffenden Abtastpunktes repräsentiert, in einen 8 Bit Analog/Digital-Wandler mit 256 Signalstufen digitalisiert. Mit dem 8 Bit Binärcode läßt sich - im Falle einer Schwarz-Weiß-Vorlage - die (kontinuierliche) Grauskala der Vorlage in 256 Graustufen unterteilen. Die Unterteilung der Grauskala ist so fein, daß das menschliche Auge bei Betrachtung eines Abtastfeldes den Unterschied zwischen zwei Grauwerten nicht bzw. kaum unterscheiden kann. Die kontinuierliche Grauskala der Vorlage kann in der Aufzeichnung quasi-kontinuierlich wiedergegeben werden.

Das Verfahren dient nun dazu, 256 abtastseitige Signale mit jeweils 256 Signalstufen in 256 binäre Aufzeichnungssignale zu transformieren, und zwar mit ausreichender Qualität im Hinblick auf Tonwert- und Detail-Wiedergabe.

Im Falle des hellsten Tonwerts (Stufe 0) wird man zweckmäßig keinen einzigen Aufzeichnungspunkt bedrucken, im Falle des dunkelsten Tonwerts (255) dementsprechend die oben erhaltenen 255 Punkte allesamt. Was mit dem 256. Punkt (in Fig. 2a mit der Bezugsziffer 18 versehen) geschieht, ist unbedeutend, weil das Auge bei normalem Sehabstand in dunklen Tonwertbereichen sehr kleine Tonwertunterschiede nicht erkennen kann. Deshalb kann der 256. Punkt entweder wie der 255., also mit ihm gemeinsam sozusagen als "Doppelpunkt", behandelt werden oder gar nicht benutzt, d.h. nie bedruckt werden.

Offensichtlich kann jedem einzelnen Abtastpunkt 14 nur ein binärer Aufzeichnungspunkt 16 zugeordnet werden, so daß dessen Tonwert normalerweise zu hoch, nämlich bedruckt, oder zu niedrig, nämlich unbedruckt, aufgezeichnet wird. Sieht man jedoch von einer punktweisen Bildmodulation ab und betrachtet statt dessen Flächen, die aus mehreren Bildpunkten bestehen, so erhält man mit wachsender Fläche immer feinere Tonwertabstufungen. Erst für die gesamte, aus 256 Bildpunkten bestehende Aufzeichnungsfläche erhält man die gewünschte feine Tonwertabstufung (256 + 1 Stufen). Dies ist deshalb ausreichend, weil bei 20 μm - Punkten die gesamte (aus 256 Bildpunkten bestehende) Aufzeichnungsfläche immer noch so klein (Seitenlänge ca. 16 x 20 μm = 320 μm = 0,32 mm) ist, daß sie visuell bei normalem Sehabstand (30 cm) gerade erkennbar ist. Als Vergleich kann ein guter TV-Monitor dienen, dessen Bildpunkte bei HDTV-Technologie ebenfalls bis zu 8 Bit Tonwertabstufung aufweisen, und zwar bei einem Leuchtpunktabstand von etwa 0,30 mm. Während die Aufzeichnungspunkte im Druckbild jedoch nahtlos aneinanderstoßen, sind die Leuchtpunkte des Monitors voneinander getrennt, was aber bereits nicht mehr erkennbar ist. Das Verfahren zeichnet sich dadurch aus, daß die begrenzte Leistungsfähigkeit des Auges mehrmals sinnvoll dazu genützt wird, eine relativ einfache technische Lösung zu ermöglichen.

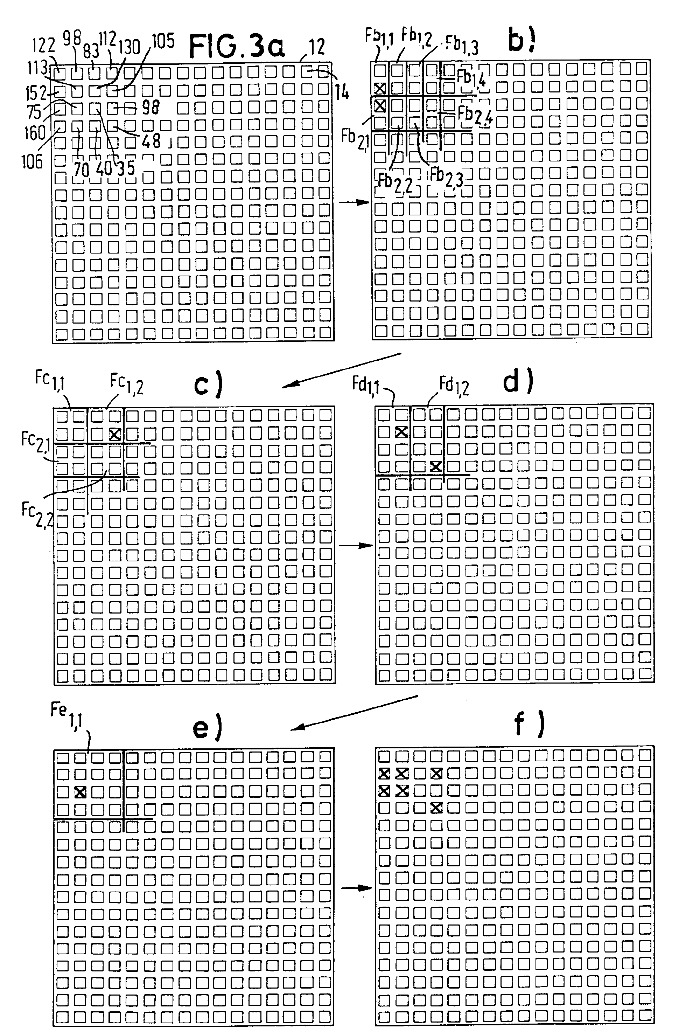

Während Fig. 1 ein Beispiel für eine mögliche Unterteilung des Abtastfeldes 12 in ineinandergeschachtelte Teilfelder zeigt, ist in Fig. 2 dargestellt, welche der zu einem Teilfeld gehörenden Aufzeichnungspunkte 16 gedruckt werden, wenn der mittlere Tonwert der in diesem Teilfeld liegenden Abtastpunkte 14 einen vorgegebenen Referenzwert übersteigt. Die zu druckenden Aufzeichnungspunkte sind jeweils durch ein "x" dargestellt. Zu der in Fig. 1 gezeigten Unterteilung gelangt man, wenn man das in Fig. 1a dargestellte Abtastfeld 12 zunächst in zwei gleichgroße Hälften $Fh_1$ und $Fh_2$ (Fig. 1h), die beiden Hälften wiederum jeweils in zwei gleichgroße Hälften $Fg_{1,1}, Fg_{2,1}$ und $Fg_{1,2}, Fg_{2,2}$ (Fig. 1g) usw. unterteilt. Es erfolgt also eine sukzessive Unterteilung des Abtastfeldes 12 in zwei Hälften, vier Viertel, acht Achtel, usw. bis schließlich nach sieben Unterteilungen 128 kleinste Teilfelder $Fb_{i,j}$, mit i=1,2,...,8 und j=1,2,...,16, vorliegen, die aus zwei Abtast- bzw. Aufzeichnungspunkten bestehen und jeweils 1/128 der gesamten Fläche des Abtastfeldes ausmachen. Das Abtastfeld 12 ist dann in mehrere verschiedengroße und ineinandergeschachtelte Teilfelder unterteilt. D.h., daß die Tonwertdaten der Abtastpunkte 14 des Abtastfeldes 12 auf mehrere verschiedengroße und ebenfalls ineinandergeschachtelte Datenblöcke aufgeteilt sind. Die in Fig. 2 angegebene Verteilung der in Abhängigkeit von dem mittleren Tonwert jedes Teilfeldes zu druckenden Aufzeichnungspunkte 16 stellt nur ein Beispiel dar. Es gibt unzählige Möglichkeiten für die Lage der pro Teilfeld potentiell zu druckenden Aufzeichnungspunkte. Dabei ist jedoch darauf zu achten, daß ein in einem größeren Teilfeld potentiell zu druckender Aufzeichnungspunkt nicht mit einem innerhalb eines kleineren Teilfeldes potentiell zu druckenden Aufzeichnungspunkt zusammenfällt. D.h., daß bei Überlagerung der in Fig. 2 angegebenen Muster zu druckender Aufzeichnungspunkte sämtliche Aufzeichnungspunkte 16 bis auf einen eingefärbt wären. Anhand des in Fig. 3 angegebenen Beispiels soll nachfolgend erläutert werden, wann und an welcher Stelle ein Aufzeichnungspunkt 16 in Abhängigkeit von den Tonwerten der Abtastpunkte 14 gedruckt wird.

Für das Beispiel sei angenommen, daß die Vorlage gleichhell wiedergegeben werden soll. Das bedeutet, daß ein Abtastfeld, das einen mittleren Grauwert von beispielsweise 150 aufweist, auch mit einem Grauwert von 150 auf dem Aufzeichnungsmedium wiedergegeben wird. Hierfür müßten also insgesamt 150 der dem Abtastfeld 12 entsprechenden Aufzeichnungspunkte 16 schwarz sein. Sollen die Vorlage und die Wiedergabe gleichhell sein, so ist der Referenzwert, über dem der Mittelwert der Tonwerte der Abtastpunkte 14 eines Teilfeldes liegen muß, damit ein zu dem Teilfeld gehörender Aufzeichnungspunkt 16 gedruckt wird, gleich dem mittleren mit den 255 Aufzeichnungspunkten pro Abtastfeld darstellbaren Tonwert, d.h. 127,5 (beachte, daß für die 256 Grautöne von 0 bis 255 nur 255 der 256 Aufzeichnungspunkte benötigt werden, so daß ein Aufzeichnungspunkt pro Abtastfeld nicht benötigt wird und stets weiß sein kann). Zweckmäßigerweise entspricht der Referenzwert dem Grauton 128, was später noch erläutert werden wird.

In Fig. 3a sind für die 16 Abtastpunkte oben links im Abtastfeld 12 die Grauwerte angegeben. Das Verfahren soll hier nur ausführlich anhand dieser 16 Abtastpunkte beschrieben werden; für die übrigen Abtastpunkte 14 des Abtastfeldes 12 läuft es analog ab. Bei der Beurteilung, welche der dem Abtastfeld 12 entsprechenden Aufzeichnungspunkte 16 gedruckt werden, wird von den einzelnen Abtastpunkten bzw. von deren Grauwerten ausgegangen. Zunächst werden die Tonwerte von jeweils zwei benachbarten, zu einem kleinsten Teilfeld $Fb_{i,j}$ zusammengefaßten Abtastpunkte betrachtet, so wie es in Fig. 3b dargestellt ist. Für jedes der kleinsten Teilfelder wird zunächst der sich aus den Tonwerten der beiden Abtastpunkte des kleinsten Teilfeldes ergebende mittlere Tonwert (Mittelwert der Tonwerte) berechnet. Liegt dieser Mittelwert über dem Referenz-Grauwert 128, wird gemäß dem in Fig. 2b angegebenen Muster einer der beiden zu dem betreffenden kleinsten Teilfeld gehörenden Aufzeichnungspunkte 16 gedruckt. Die Grauwerte der einzelnen Abtastpunkte liegen als 8-stelliger Binärcode vor. Um zu entscheiden, ob ein Aufzeichnungspunkt zu drucken ist, wird von den Binärcoden der entsprechenden Tonwerte ausgegangen. Für das kleinste Teilfeld $Fb_{1,1}$ der Fig. 3b ergibt sich also folgende Rechnung:

```
OLLL LOLO    (122)
LOOL LOOO    (152)
L OOOL OOLO
```

In der digitalen Schaltungstechnik wird der Mittelwert von zwei Zahlen zweckmäßig durch einen Additions- und einen Shift-Schritt gebildet. Für den obigen Fall ergibt sich demnach für den Mittelwert

LOOO LOOL,O

Zugleich ist einsichtig, daß das Übertrag-Bit eines 8 Bit Addierers den Wert "L" annimmt, wenn die Summe der beiden Zahlen 255 übersteigt, ihr Mittelwert also größer oder gleich 128 ist. Folglich genügt die Ausführung einer Addition, um anhand des Übertrag-Bits anzeigen zu können, ob der Mittelwert zweier Zahlen den vorgegebenen Grenzwert erreicht oder übersteigt. Die Anwendung dieser Erkenntnis bietet sich zunächst für die kleinsten Teilfelder der Fign. 1b bzw. 3b an, denn die kleinsten Teilfelder dienen zur Darstellung des höchstwertigsten Bits des Mittelwerts der beiden Tonwerte.

Für die anderen kleinsten Teilfelder der Fig. 3b ergibt sich analog:

$$Fb_{2,1} \qquad \begin{array}{ll} LOLO\ OOOO & (160) \\ OLLO\ LOLO & (106) \\ \hline L\ OOOO\ LOLO \end{array}$$

$$Fb_{1,2} \qquad \begin{array}{ll} OLLO\ OOLO & (\ 98) \\ OLLL\ OOOL & (113) \\ \hline O\ LLOL\ OOLL \end{array}$$

$$Fb_{2,2} \qquad \begin{array}{ll} OLOO\ LOLL & (\ 75) \\ OLOO\ OLLO & (\ 70) \\ \hline O\ LOOL\ OOOL \end{array}$$

$$Fb_{1,3} \qquad \begin{array}{ll} OLOL\ OOLL & (\ 83) \\ LOOO\ OOLO & (130) \\ \hline O\ LLOL\ OLOL \end{array}$$

$$Fb_{2,3} \qquad \begin{array}{ll} OOLO\ OOLL & (\ 35) \\ OOLO\ LOOO & (\ 40) \\ \hline O\ OLOO\ LOLL \end{array}$$

$$Fb_{1,4} \qquad \begin{array}{ll} OLLL\ OOOO & (112) \\ OLLO\ LOOL & (105) \\ \hline O\ LLOL\ LOOL \end{array}$$

$$Fb_{2,4} \qquad \begin{array}{ll} \text{OLLO OOLO} & (\ 98) \\ \underline{\text{OOLL OOOO}} & (\ 48) \\ \text{O LOOL OOLO} & \end{array}$$

Aufzeichnungspunkte werden demnach nur in den Teilfeldern $Fb_{1,1}$ und $Fb_{2,1}$ gedruckt, da in beiden Fällen bei der Summierung der beiden jeweiligen Tonwerte ein Übertrag-Bit entsteht, das den Wert "L" hat. Gemäß dem in Fig. 2b angegebenen Aufzeichnungspunktschema werden die Aufzeichnungspunkte mit den X-, Y-Koordinaten 2,1 und 3,1 gedruckt bzw. angesprochen.

Zur Feststellung, welche Aufzeichnungspunkte in den 128 kleinsten Teilfeldern gemäß Fig. 1b bzw. Fig. 3b zu drucken sind, werden somit lediglich 128 Addierschritte benötigt. Ein einzelner 8 Bit-Addierer in Low Power Schottky-Technologie beansprucht für einen Addierzyklus beispielsweise 25 Nanosekunden (ns), (SN 74 S 283 von Texas Instruments), was einer Ausführungsfrequenz von 40 MHz entspricht. Um die Druckpunkte für die 1/128 der Teilfelder möglichst schnell zu berechnen, kann man zunächst mehrere einzelne 8 Bit-Addierer parallel schalten und erhält beispielsweise für 8 parallel geschaltete Addierer 16 Addierzyklen, somit also 400 ns bzw. 2,5 MHz für den oben angeführten Typ. Noch wesentlich schnellere Verarbeitungsmöglichkeiten werden mit sogenannten kundenspezifischen integrierten Schaltungen erzielt, deren Addierer teilweise Ausführungsfrequenzen von 100 MHz überschreiten. Die für die online Anwendung des Verfahrens in modernen Scannern erforderlichen Datentransferraten von 1 MByte/s können somit erreicht und deutlich überschritten werden.

Im nächsten Schritt werden die mittleren Tonwerte der in Fig. 1c bzw. 3c eingezeichneten Teilfelder, die jeweils 1/64 des gesamten Abtastfeldes entsprechen, berechnet. Zunächst wird überprüft, ob der Mittelwert der vier Tonwerte größer oder gleich 128 ist, d.h., ob die Summe aus den vier Tonwerten größer oder gleich 2 x 256 = 512 ist. Die Summe von vier binärkodierten Zahlen ist aber bereits dann größer oder gleich 512, wenn der Übertrag, der bei Addition der sieben niederwertigeren Bits der vier Binärzahlen entsteht, den Wert "2L" hat. Die Teilfelder $Fc_{i,j}$ zweiter Ordnung dienen nämlich zur Darstellung des zweithöchstwertigsten Bits des Mittelwerts von vier Tonwerten. Es ist also nicht erforderlich, die gesamten acht Stellen der vier binärkodierten Tonwertdaten zu betrachten, sondern es reicht aus, nur bis einschließlich der $2^6$-wertigen Stelle zu addieren. Die Summe der vier Tonwerte kann aus den einzelnen Tonwerte gebildet werden, nämlich mittels dreier Additionsschritte. Günstiger ist es jedoch, die Summe aus den (bereits berechneten) Tonwertsummen derjenigen in Fig. 3b eingezeichneten kleinsten Teilfelder $Fb_{i,j}$ zu berechnen, die jeweils in einem der in Fig. 3c eingezeichneten übergeordneten Teilfelder $Fc_{i,j}$ liegen. Hierbei ist nämlich nur ein Addierschritt erforderlich. Die Summe aus diesen beiden Tonwertsummen ist aber genau dann größer oder gleich 512 (der Mittelwert also größer oder gleich 256), wenn sich bei Addition der jeweils acht niederwertigen Bits der beiden Tonwertsummen ein Übertrag-Bit mit dem Wert "L" ergibt. Die Teilfelder $Fc_{i,j}$ zweiter Ordnung dienen nämlich auch zur Darstellung des höchstwertigsten Bits des Mittelwerts der beiden aus jeweils zwei Tonwerten gebildeten mittleren Tonwerte. Überraschend dabei ist, daß es zum Feststellen, ob die Tonwertsumme aus den vier Tonwerten größer oder gleich 512 ist, nicht erforderlich ist, die sich bei Berechnung der Tonwertsummen der kleinsten Teilfelder ergebenden höchstwertigsten Übertrag-Bits zu berücksichtigen. Offenbar spielen auch in beiden Fällen weder die höher- noch die niederwertigen Bits der im ersten Schritt berechneten Tonwertsummen eine Rolle für die Feststellung, ob die Summe größer oder gleich 512 ist. Deshalb genügt auch wiederum für die Summenbildung ein 8 Bit-Addierer.

Für die in Fig. 3c eingezeichneten Felder zweiter Ordnung ergeben sich dann folgende Berechnungen:

$$Fc_{1,1} = Fb_{1,1} + Fb_{1,2} \qquad \begin{array}{l} \text{OOOL OOLO} \\ \underline{\text{LLOL OOLL}} \\ \text{O LLLO OLOL} \end{array}$$

$$Fc_{2,1} = Fb_{2,1} + Fb_{2,2} \quad \begin{array}{l} \text{OOOO LOLO} \\ \underline{\text{LOOL OOOL}} \\ \text{O LOOL LOLL} \end{array}$$

$$Fc_{1,2} = Fb_{1,3} + Fb_{1,4} \quad \begin{array}{l} \text{LLOL OLOL} \\ \underline{\text{LLOL LOOL}} \\ \text{L LOLO LLLO} \end{array}$$

$$Fc_{2,2} = Fb_{2,3} + Fb_{2,4} \quad \begin{array}{l} \text{OLOO LOLL} \\ \underline{\text{LOOL OOLO}} \\ \text{O LLOL LLOL} \end{array}$$

Im obigen Beispiel entsteht nur bei der Berechnung der Tonwertsummen für das Feld $Fc_{1,2}$, das sich aus den beiden kleinsten Teilfeldern $Fb_{1,3}$ und $Fb_{1,4}$ zusammensetzt, ein Übertrag-Bit mit dem Wert "L". D.h., daß nur in dem Teilfeld $Fc_{1,2}$ zweiter Ordnung ein Aufzeichnungspunkt zu drucken ist. Gemäß dem in Fig. 2c angegebenen Aufzeichnungspunktmuster ist dies der Aufzeichnungspunkt mit den Koordinaten 2,4 der in Fig. 3c eingezeichnet ist. Zur Feststellung, welche Aufzeichnungspunkte innerhalb der Teilfelder zweiter Ordnung zu drucken sind, sind also nur 64 Addierschritte erforderlich.

Die obigen Überlegungen lassen sich analog auch auf die Teilfelder höherer Ordnung übertragen. Als nächstes sind die in Fig. 1d bzw. 3d eingezeichneten Teilfelder $Fd_{1,1}$ und $Fd_{1,2}$ dritter Ordnung zu untersuchen. Ist der mittlere Tonwert der zu jedem einzelnen Teilfeld dritter Ordnung gehörenden Abtastpunkte größer oder gleich 128, d.h. die Summe größer oder gleich $4 \times 256 = 1024$, ist jeweils einer der zu dem betreffenden Teilfeld dritter Ordnung gehörenden Aufzeichnungspunkte zu drucken. Die Tonwertsumme ist genau dann größer oder gleich 256, wenn bei Addition der acht niederwertigen Bits der Tonwertsummen der zugehörigen Teilfelder zweiter Ordnung ein Übertrag-Bit mit dem Wert "L" entsteht. Im Beispiel ergibt sich für die beiden Teilfelder $Fd_{1,1}$ und $Fd_{1,2}$ dritter Ordnung:

$$Fd_{1,1} = Fc_{1,1} + Fc_{2,1} \quad \begin{array}{l} \text{LLLO OLOL} \\ \underline{\text{LOOL LOLL}} \\ \text{L LOOO OOOO} \end{array}$$

$$Fd_{1,2} = Fc_{1,2} + Fc_{2,2} \quad \begin{array}{l} \text{LOLO LLLO} \\ \underline{\text{LLOL LLOL}} \\ \text{L LOOO LOLL} \end{array}$$

Da für beide Teilfelder dritter Ordnung das Übertrag-Bit bei der Summenbildung den Wert "L" hat, muß jeweils ein Aufzeichnungspunkt der acht zu einem Teilfeld gehörenden Aufzeichnungspunkte gedruckt werden. Die gemäß dem in Fig. 2d dargestellten Aufzeichnungspunktmuster zu druckenden Aufzeichnungspunkte sind in Fig. 3d eingetragen. Zur Feststellung, ob einer der zu den Teilfeldern dritter Ordnung jeweils gehörenden Aufzeichnungspunkte zu drucken ist, sind in der dritten Stufe nur noch 32 Addierschritte erforderlich.

Für das in Fig. 3e eingezeichnete Teilfeld $Fe_{1,1}$ vierter Ordnung ergibt sich analog:

$$Fe_{1,1} = Fd_{1,1} + Fd_{1,2} \qquad \begin{array}{r} LOOO\ OOOO \\ \underline{LOOO\ LOLL} \\ L\ OOOO\ LOLL \end{array}$$

Da das Übertrag-Bit den Wert "L" hat, muß einer der zu dem Teilfeld $Fe_{1,1}$ gehörenden Aufzeichnungspunkte gedruckt werden. Der sich nach dem Aufzeichnungspunktmuster gemäß Fig. 2e ergebende Aufzeichnungspunkt ist in Fig. 3e eingezeichnet. In Fig. 3f sind sämtliche, der oberen linken Ecke des Abtastfeldes 12 entsprechenden, zu druckenden Aufzeichnungspunkte eingezeichnet.

Wendet man das Verfahren auf das gesamte Abtastfeld 12 an, so erhält man analog zu dem oben beschriebenen Vorgehen die Lage der dem Abtastfeld 12 entsprechenden, zu druckenden Aufzeichnungspunkte.

Ganz allgemein gesprochen, dient das Verfahren dazu, aus den abtastseitigen (analogen) Bildpunkt-Tonwertsignalen binäre Signale, die entweder "High" oder "Low" sind, zu erzeugen. Auf diese Weise kann ein "analoges" Bild "binär" aufgezeichnet werden. Die Aufzeichnung muß nicht zwangsläufig in Form eines Drucks des Bildes erfolgen; die Tatsache, daß das Bild in Form von einzelnen binären Signalen vorliegt, gestattet auch die einfache Speicherung des Bildes in einem Magnet- oder Halbleiterspeicher. Auch beim Speichern handelt es sich um ein Aufzeichnen des Bildes im Sinne der vorliegenden Anmeldung.

Bei dem hier beschriebenen Verfahren sind keine Fehlerberechnungen bzw. -betrachtungen erforderlich. Die Anzahl der Aufzeichnungspunkte, die pro Abtastfeld zu drucken sind, damit der Tonwert der Vorlage "abtastfeldweise" exakt wiedergegeben wird, braucht nicht im vorhinein berechnet zu werden, sondern ergibt sich automatisch bei der Verteilung der Aufzeichnungspunkte auf die Teilfelder der verschiedenen Ordnungen. Wenn für jedes der 128 kleinsten Teilfelder untersucht wird, ob ein zu ihm gehörender Aufzeichnungspunkt zu drucken ist, steht noch nicht fest, wieviele Aufzeichnungspunkte insgesamt noch gedruckt werden müssen, damit das Abtastfeld sowohl in bezug auf seinen mittleren Tonwert als auch in bezug auf die Detailwiedergabe bzw. den -kontrast originalgetreu wiedergegeben wird. Trotzdem sind am Ende des Verfahrens genauso viele Aufzeichnungspunkte gedruckt, wie es zur exakten Wiedergabe des mittleren Tonwerts des Abtastfeldes erforderlich ist. Da das Abtastfeld in immer kleinere ineinandergeschachtelte Teilfelder unterteilt ist und die Verteilung der zu druckenden Aufzeichnungspunkte für jedes einzelne Teilfeld der verschiedenen Ordnungen vorgenommen wird, werden die einzelnen Details der Vorlage sowohl mit maximaler Schärfe als auch mit maximalem Kontrast wiedergegeben.

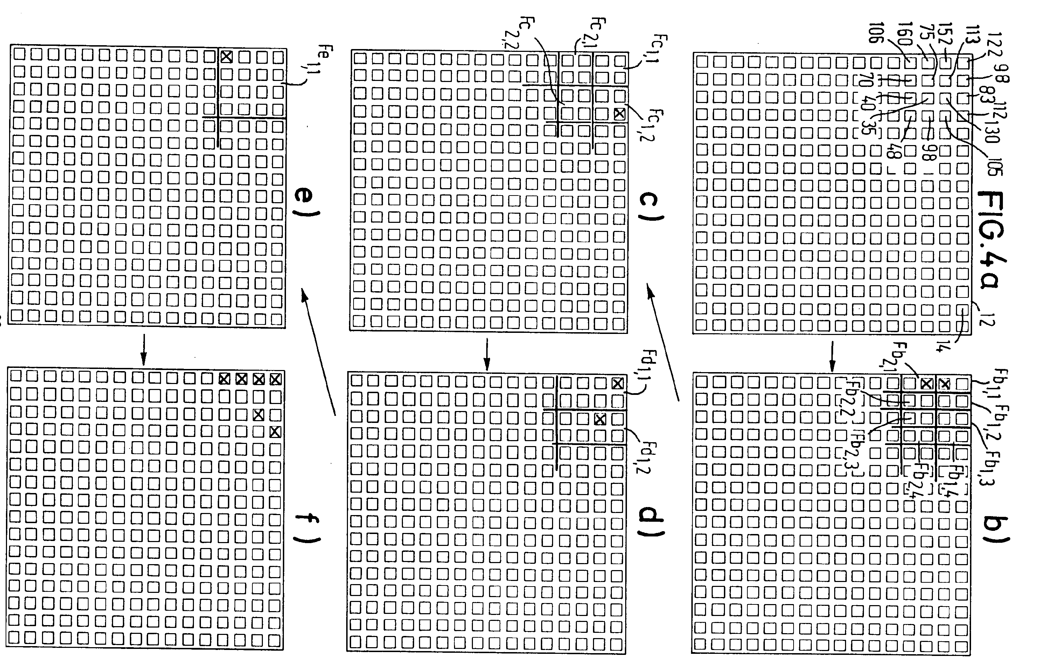

Anhand der Fign. 4a-4f soll nachfolgend kurz der Verfahrensablauf beschrieben werden, wenn zur Festlegung der Position der zu druckenden Aufzeichnungspunkte nicht wie im obigen Fall von einem im voraus festgelegten Aufzeichnungspunktmuster ausgegangen wird, sondern die Positionen der Aufzeichnungspunkte anhand des Vergleichs der Tonwerte der zu den kleinsten Teilfelder gehörenden Abtastpunkte bzw. anhand des Vergleichs der Tonwertsummen der Abtastpunkte der Teilfelder, die zu einem Teilfeld nächsthöherer Ordnung zusammengefaßt sind, ermittelt werden. Die Tonwerte der 16 Abtastpunkte oben links im Abtastfeld 12 der Fig. 4a sowie die Unterteilung des Abtastfeldes 12 in die einzelnen Teilfelder sind jeweils die gleichen wie im Falle des Beispiels nach der Fig. 3a. Zur Ermittlung, in welchem Teilfeld jeweils ein Aufzeichnungspunkt zu drucken ist, kann daher auf die obigen Überlegungen verwiesen werden.

Für das kleinste Teilfeld $Fb_{1,1}$ ist ein Aufzeichnungspunkt zu drucken. Um seine Position zu ermitteln, werden die Tonwerte 122 und 152 der zu den Teilfeldern $Fb_{1,1}$ gehörenden Abtastpunkte (Koordinaten (1,1),(1,2)) verglichen. Es wird derjenige Aufzeichnungspunkt gedruckt, dessen Position dem Abtastpunkt mit dem größten Tonwert entspricht. In diesem Falle wird der Aufzeichnungspunkt (1,2) gedruckt. Die Position des zweiten dem Teilfeld $Fb_{1,1}$ zugeordneten Aufzeichnungspunktes (1,1) wird gespeichert. Dieser Aufzeichnungspunkt wird eventuell in der nächsten Stufe des Verfahrens gedruckt, was weiter unten beschrieben ist. Entsprechend wird in Bezug auf das Teilfeld $Fb_{2,1}$, für das ebenfalls ein Aufzeichnungspunkt zu drucken ist, der Aufzeichnungspunkt (3,1) gedruckt und die Position des Aufzeichnungspunktes (4,1) gespeichert. In den anderen im Rahmen dieses Beispiels zu betrachtenden kleinsten Teilfeldern sind keine Aufzeichnungspunkte zu drucken. Bezüglich dieser Teilfelder wird jeweils lediglich die Position derjenigen Aufzeichnungspunkte gespeichert, die eventuell später noch zu drucken sind. So wird beispielsweise für das Teilfeld $Fb_{1,2}$ die Position des Aufzeichnungspunktes (2,2) gespeichert, da der entsprechende Abtastpunkt (2,2) einen größeren Tonwert (nämlich 113) hat als der ebenfalls im Teilfeld $Fb_{1,2}$ liegende Abtastpunkt (1,2) (Grauwert 98). Wenn also im Verlauf der zweiten Stufe für den Bereich des kleinsten Teilfeldes $Fb_{1,2}$ noch ein Aufzeichnungspunkt zu drucken ist, so soll in jedem Fall der Abtastpunkt (1,2) nicht als gedruckter Aufzeichnungspunkt erscheinen, da er heller ist als der Abtastpunkt (2,2). Daher wird die Position des dem Abtastpunkt (2,2) entsprechenden Aufzeichnungspunktes gespeichert. Für die kleinsten Teilfelder werden also folgende Aufzeichnungspunktpositionen gespeichert:

$Fb_{1,1}$: (1,1)  ;  $Fb_{2,1}$: (4,1)

$$Fb_{1,2}: (2,2) \qquad ; \qquad Fb_{2,2}: (3,2)$$
$$Fb_{1,3}: (2,3) \qquad ; \qquad Fb_{2,3}: (4,3)$$
$$Fb_{1,4}: (1,4) \qquad ; \qquad Fb_{2,4}: (3,4)$$

Bei Betrachtung der nächstgrößeren Teilfelder Fc ergibt sich, daß nur für das Teilfeld $Fc_{1,2}$ ein Aufzeichnungspunkt zu drucken ist. Dieses Teilfeld $Fc_{1,2}$ setzt sich aus den beiden kleinsten Teilfeldern $Fb_{1,3}$ und $Fb_{1,4}$ zusammen. Für beide Teilfelder ist jeweils die Position eines Aufzeichnungspunkte gespeichert, der gedruckt werden könnte. Um zu entscheiden, welcher Aufzeichnungspunkt gedruckt wird, werden die Tonwertsummen der beiden kleinsten Teilfelder $Fb_{1,3}$ und $Fb_{1,4}$ verglichen, und der Aufzeichnungspunkt gedruckt, der dem kleinsten Teilfeld mit der größeren Tonwertsumme entspricht. In Bezug auf das Teilfeld $Fc_{1,2}$ wird also genau in dem Bereich gedruckt, in dem die Vorlage am dunkelsten ist. Im vorliegenden Fall beträgt die Tonwertsumme des Teilfeldes $Fb_{1,3}$ 213 und diejenige des Teilfeldes $Fb_{1,4}$ 217. Demzufolge wird der im Teilfeld $Fb_{1,4}$ liegende Aufzeichnungspunkt (1,4) gedruckt, dessen Position zuvor abgespeichert worden ist. Die Position des Abtastpunktes (2,3), der ebenfalls dem Teilfeld $Fc_{1,2}$ zugeordnet ist, wird gespeichert. Für die übrigen drei Teilfelder Fc werden ebenfalls die Positionen der eventuell später zu druckenden Aufzeichnungspunkte gespeichert, wobei für jedes dieser drei Teilfelder zwei Positionen möglich sind, aber nur eine abgespeichert wird. Beispielsweise sind für das Teilfeld $Fc_{2,2}$ die Position des Aufzeichnungspunktes (4,3) (für das Teilfeld $Fb_{2,3}$) und die Position des Aufzeichnungspunktes (3,4) (für das Teilfeld $Fb_{2,4}$) möglich. Es wird in diesem Fall die Position desjenigen Aufzeichnungspunktes gespeichert, der dem kleinsten Teilfeld mit der größeren Tonwertsumme zugeordnet ist. Das ist das kleinste Teilfeld $Fb_{2,4}$, so daß die Position des Aufzeichnungspunktes (3,4) abgespeichert wird. Entsprechende Überlegungen werden für die Teilfelder $Fc_{1,1}$ und $Fc_{2,1}$ gemacht, und demzufolge werden die folgenden Positionen abgespeichert:

$$Fc_{1,1}: (1,1) \qquad ; \qquad Fc_{1,2}: (2,3)$$
$$Fc_{2,1}: (4,1) \qquad ; \qquad Fc_{2,2}: (3,4)$$

Bei Betrachtung der Teilfelder nächstgrößerer Ordnung $Fd_{1,1}$ und $Fd_{1,2}$ ergibt sich, daß pro Teilfeld ein Abtastpunkt zu drucken ist. Pro Teilfeld sind zwei Abtastpunkte möglich, wobei der Abtastpunkt gedruckt wird, der dem Teilfeld nächstkleinerer Ordnung mit der größeren Tonwertsumme zugeordnet ist. Die Tonwertsumme der das Teilfeld $Fd_{1,1}$ bildenden Teilfelder nächstniedrigerer Ordnung $Fc_{1,1}$ und $Fc_{2,1}$ betragen 485 (für $Fc_{1,1}$) und 411 (für $Fc_{2,1}$); es wird der zu dem Teilfeld $Fc_{1,1}$ gehörende Aufzeichnungspunkt, also der Aufzeichnungspunkt (1,1) gedruckt. Im Falle des Teilfeldes $Fd_{1,2}$ wird der Aufzeichnungspunkt (2,3) gedruckt. Die Position der für jedes der beiden Teilfelder ebenfalls möglichen Aufzeichnungspunkte werden abgespeichert, so daß sich ergibt:

$$Fd_{1,1}: (4,1) \qquad ; \qquad Fd_{1,2}: (3,4).$$

Für das nächstgrößere Teilfeld $Fe_{1,1}$ muß ebenfalls ein Aufzeichnungspunkt gedruckt werden. Zwecks Entscheidung, welcher der beiden möglichen Aufzeichnungspunkte gedruckt wird, wird die Summe aus den Tonwerten der dem Teilfeld $Fd_{1,1}$ und dem Teilfeld $Fd_{1,2}$ jeweils zugeordneten Abtastpunkte verglichen, wobei sich für $Fd_{1,1}$ der Wert 896 und für $Fd_{1,2}$ der Wert 651 ergibt. Es wird also der dem Teilfeld $Fd_{1,1}$ zugeordnete Aufzeichnungspunkt, also der Aufzeichnungspunkt (4,1) gedruckt. Für das Teilfeld wird als eventuell in der nächsten Stufe zu druckender Aufzeichnungspunkt der Aufzeichnungspunkt (3,4) gespeichert.

In Fig. 4f sind die im betrachteten Bereich zu druckenden Aufzeichnungspunkte eingezeichnet. Im Vergleich zu dem Beispiel nach den Fign. 3a-3f fällt auf, daß sich die gedruckten Aufzeichnungspunkte an den Stellen befinden, an denen die Vorlage ihre dunkelsten Abtastpunkte aufweist. So ist beispielsweise in den dem Teilfeld $Fc_{2,2}$ entsprechenden Bereich der Vorlage, der im Vergleich zu den übrigen am hellsten ist, kein Aufzeichnungspunkt eingefärbt, was aber beim Beispiel nach den Fign. 3a-3f der Fall ist. Die Vorlage ist also im Detail noch genauer wiedergegeben oder anders ausgedruckt: Die Summe der in der Wiedergabe pro Abtastpunkt gemachten Fehler ist minimal.

Die Zuverlässigkeit des Verfahrens wird anhand der beiden nachfolgend beschriebenen Beispiele deutlich. Es hat sich gezeigt, daß die Wiedergabe von Bildbereichen, die einen Tonwert von 127 oder 128 haben, besonders fehlerhaft sein kann. Die Tonwerte 127 und 128 sind deshalb kritisch, weil sie den beiden mittleren durch die 256 Aufzeichnungspunkte darstellbaren Tonwerte entsprechen. Ein Abtastpunkt mit dem Tonwert 127 oder 128 kann jedoch nur durch einen weißen bzw. einen schwarzen Aufzeichnungspunkt wiedergegeben werden. Der bei der Aufzeichnung eines einzelnen Abtastpunktes entstehende Fehler ist also jeweils maximal.

Im ersten Fall sei angenommen, daß das gesamte Abtastfeld 12 einen Tonwert von 128 aufweist, d.h. jeder Abtastpunkt 14 des Abtastfeldes 12 weist einen Tonwert von 128 auf. Das aufgezeichnete Quasihalbtonbild muß also in dem dem Abtastfeld entsprechenden Bereich 128 schwarz eingefärbte Aufzeichnungspunkte aufweisen. Für sämtliche kleinsten Teilfelder $Fb_{i,j}$ (s. Fig. 1b) ergibt sich demnach eine Tonwertsumme von

$$
\begin{array}{cc}
\text{LOOO} & \text{OOOO} \\
\underline{\text{LOOO}} & \underline{\text{OOOO}} \\
\text{L} \quad \text{OOOO} & \text{OOOO}
\end{array}
$$

Das Übertrag-Bit der Tonwertsumme ist "L", d.h. pro kleinstem Teilfeld $Fb_{i,j}$ ist ein Aufzeichnungspunkt zu drucken. Nach der ersten Stufe des Verfahrens sind also die in Fig. 2b angegebenen Aufzeichnungspunkte gedruckt.

Gemäß den obigen Ausführungen werden für die Tonwertsummen der Felder $Fc_{i,j}$ zweiter Ordnung (Fig. 1c) jeweils die Summe aus den Tonwertsummen der beiden zu einem Feld zweiter Ordnung zusammengesetzten kleinsten Teilfelder ermittelt, wobei das Übertrag-Bit der Tonwertsummen der kleinsten Teilfelder unberücksichtigt bleibt. Damit ergibt sich für die Tonwertsummen der Felder $Fc_{i,j}$ zweiter Ordnung

$$
\begin{array}{cc}
\text{OOOO} & \text{OOOO} \\
\underline{\text{OOOO}} & \underline{\text{OOOO}} \\
\text{O} \quad \text{OOOO} & \text{OOOO}
\end{array}
$$

Da das Übertrag-Bit den Wert "0" annimmt, wird für die Felder zweiter Ordnung kein Aufzeichnungspunkt gedruckt.

Genau die gleichen Betrachtungen lassen sich für die Felder dritter (Fig. 1b), vierter (Fig. 1e), fünfter (Fig. 1f), sechster (Fig. 1g), siebter (Fig. 1h) und achter (Fig. 1i) Ordnung anstellen. In allen Fällen hat das Übertrag-Bit der Tonwertsumme den Wert "0", was bedeutet, daß keiner der zu den einzelnen Teilfeldern höherer Ordnung gehörenden Aufzeichnungspunkte gedruckt wird. Insgesamt werden also 128 Aufzeichnungspunkte gedruckt, nämlich der Tonwertsumme für jedes kleinste Teilfeld entsprechend genau ein Aufzeichnungspunkt in jedem der 128 kleinsten Teilfelder. Der kritische Tonwert von 128 für das gesamte Abtastfeld 12 kann also in dem aufgezeichneten Bild exakt wiedergegeben werden.

Nun sei angenommen, daß jeder Abtastpunkt 14 des Abtastfeldes 12 den Tonwert 127 hat. Für die Tonwertsumme jedes kleinsten Teilfeldes $Fd_{i,j}$ gilt dann:

$$
\begin{array}{cc}
\text{OLLL} & \text{LLLL} \\
\underline{\text{OLLL}} & \underline{\text{LLLL}} \\
\text{O} \quad \text{LLLL} & \text{LLLO}
\end{array}
$$

Das Übertrag-Bit der Tonwertsumme jedes kleinsten Teilfeldes ist also "0". Daher wird für keines der kleinsten Teilfelder ein Aufzeichnungspunkt gedruckt.

Für die Tonwertsumme der Teilfelder $Fc_{i,j}$ zweiter Ordnung (Fig. 1c) ergibt sich:

$$
\begin{array}{cc}
\text{LLLL} & \text{LLLO} \\
\underline{\text{LLLL}} & \underline{\text{LLLO}} \\
\text{L} \quad \text{LLLL} & \text{LLOO}
\end{array}
$$

Das Übertrag-Bit der Tonwertsumme jedes Teilfeldes zweiter Ordnung hat also den Wert "L", so daß in jedem Teilfeld zweiter Ordnung gemäß dem in Fig. 2c angegebenen Muster ein Aufzeichnungspunkt gedruckt wird. Der zweiten Stufe des Verfahrens zur Folge werden also bereits 64 Aufzeichnungspunkte gedruckt.

Für die Tonwertsummen der Teilfelder höherer Ordnung (Fign. 1d bis 1i) ergibt sich:

$$
Fd_{i,j} \qquad
\begin{array}{cc}
\text{LLLL} & \text{LLOO} \\
\underline{\text{LLLL}} & \underline{\text{LLOO}} \\
\text{L} \quad \text{LLLL} & \text{LOOO}
\end{array}
$$

17

(es werden 32 weitere Aufzeichnungspunkte gedruckt)

$$Fe_{i,j} \qquad \frac{\begin{array}{l} LLLL\ LOOO \\ LLLL\ LOOO \end{array}}{L\ LLLL\ OOOO}$$

(es werden 16 weitere Aufzeichnungspunkte gedruckt)

$$Ff_{i,j} \qquad \frac{\begin{array}{l} LLLL\ OOOO \\ LLLL\ OOOO \end{array}}{L\ LLLO\ OOOO}$$

(es werden 8 weitere Aufzeichnungspunkte gedruckt)

$$Fg_{i,j} \qquad \frac{\begin{array}{l} LLLO\ OOOO \\ LLLO\ OOOO \end{array}}{L\ LLOO\ OOOO}$$

(es werden 4 weitere Aufzeichnungspunkte gedruckt)

$$Fh_{i} \qquad \frac{\begin{array}{l} LLOO\ OOOO \\ LLOO\ OOOO \end{array}}{L\ LOOO\ OOOO}$$

(es werden 2 weitere Aufzeichnungspunkte gedruckt)

$$Fi \qquad \frac{\begin{array}{l} LOOO\ OOOO \\ LOOO\ OOOO \end{array}}{L\ OOOO\ OOOO}$$

(es wird 1 weiterer Aufzeichnungspunkt gedruckt)

Nach der zweiten Stufe werden 64, nach der dritten Stufe 32, nach der vierten Stufe 16, nach der fünften Stufe 8, nach der sechsten Stufe 4 und nach der siebten Stufe 2 weitere Aufzeichnungspunkte gedruckt, wobei nach der achten Stufe noch ein weiterer Aufzeichnungspunkt gedruckt wird. Insgesamt werden also 127 der 256 dem Abtastfeld 12 entsprechenden Aufzeichnungspunkte gedruckt. Auch in diesem Fall wird der Tonwert 127 des Abtastfeldes exakt wiedergegeben.

Die letzten beiden Beispiele zeigen, wie exakt das Verfahren arbeitet, ohne daß Fehlerbetrachtungen irgendwelcher Art erforderlich sind.

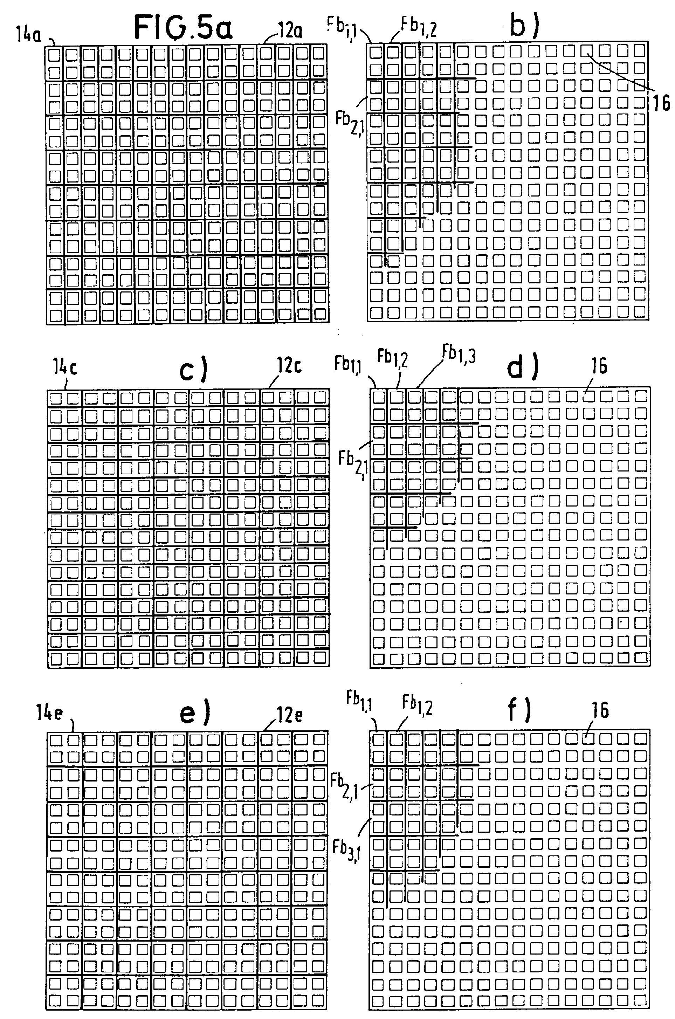

Bei den bisher besprochenen Beispielen handelte es sich stets um Fälle, in denen die Aufzeichnungsfeinheit gleich der Abtastfeinheit war, d.h., daß ein Abtastpunkt durch einen Aufzeichnungspunkt wiedergegeben wurde. In Fig. 5 sind drei Beispiele angegeben, bei denen die Aufzeichnungsfeinheit $\sqrt{2}$-mal größer als die Abtastfeinheit ist, d.h., daß ein Abtastpunkt durch zwei Aufzeichnungspunkte wiedergegeben wird (Fign. 5a bis 5d). In den Fign. 5e und 5f ist ein Beispiel dargestellt, bei dem die Aufzeichnungsfeinheit zweimal so groß wie die Abtastfeinheit ist, d.h., daß ein Abtastpunkt durch vier Aufzeichnungspunkte wiedergegeben wird.

Bei dem in den Fign. 5a und 5b dargestellten Fall wird jeder der 128 Abtastpunkte 14a des Abtastfeldes 12a durch die beiden zu einem kleinsten Teilfeld $Fb_{i,j}$ gehörenden Aufzeichnungspunkte 16 wiedergegeben. Der mittlere Tonwert für ein kleinstes Teilfeld ist also gleich dem Tonwert des dieses kleinste Teilfeld ausfüllenden Abtastpunktes 14a. Für die kleinsten Teilfelder braucht bei einer derartigen Lage des Abtastpunktes in bezug auf die kleinsten Teilfelder keine Summenbildung zu erfolgen; das Übertrag-Bit, aufgrund dessen ein zu einem kleinsten Teilfeld gehörender Aufzeichnungspunkt gedruckt wird, entspricht hierbei dem höchstwertigen Bit des binärkodierten Tonwertes des betreffenden Abtastpunktes. In der ersten Verfahrensstufe können also 128 Addierschritte, d.h. ca. 50% der für das ganze Abtastfeld erforderlichen Addierschritte eingespart werden. Bezüglich der weiteren Verfahrensschritte kann analog zu dem in Fig. 3 beschriebenen Beispiel verfahren werden. Die (nicht berechnete) jedoch für die weiteren Berechnungen erforderliche Tonwertsumme für die kleinsten Teilfelder wird aus dem binärkodierten Tonwert des entsprechenden Abtastpunktes durch Hinzufügen einer "0" als niederwertigstes Bit generiert. Das höchstwertigste Bit dieses neun Stellen aufweisenden Binärcodes entspricht dem Übertrag-Bit der Tonwertsumme für die kleinsten Teilfelder und wird für die nachfolgenden Berechnungen nicht berücksichtigt.

Die Aufzeichnung von Bildern mit einem Aufzeichnungs-zu Abtastfeinheit-Verhältnis von $\sqrt{2}$ hat den Vorteil, daß abtastseitig weniger Daten anfallen, die Abtastung aber noch ausreichend scharf erfolgt. Die gegenüber der Abtastung höhere Aufzeichnungsfeinheit bewirkt, daß das Bild eine geringere Körnigkeit aufweist, wodurch es ruhiger wirkt und besser zu betrachten ist. In bezug auf die Verarbeitung der Tonwertdaten ergibt sich der Vorteil, daß pro Abtastfeld 50% weniger Addierschritte erforderlich sind, was in bezug auf die apparative Realisierung einer Einsparung von 128 Addierern entspricht.

In den Fign. 5c und 5d ist ebenfalls ein Beispiel dargestellt, bei dem die Aufzeichnungsfeinheit um den Faktor $\sqrt{2}$ größer als die Abtastfeinheit ist. Hierbei sind jedoch die Abtastpunkte 14c des Abtastfeldes 12c um 90° gegenüber den kleinsten Teilfeldern $Fb_{i,j}$ gedreht. Ein Abtastpunkt 14c des Abtastfeldes 12 wird nicht mehr durch die beiden zu ein und demselben kleinsten Teilfeld gehörenden Aufzeichnungspunkte 16 wiedergegeben, sondern durch die zwei benachbarten Aufzeichnungspunkte 16 zweier benachbarter kleinster Teilfelder. Das Verfahren kann genauso, wie im Zusammenhang mit Fig. 3 beschrieben, ablaufen, wenn die linke Hälfte eines Abtastpunktes 14c als zu einem kleinsten Teilfeld gehörend und die rechte Hälfte als zu dem benachbarten rechten kleinsten Teilfeld gehörend betrachtet wird.

Bei dem in den Fign. 5e und 5f dargestellten Fall ist die Aufzeichnungsfeinheit doppelt so groß wie die Abtastfeinheit. Ein Abtastpunkt 14e des Abtastfeldes 12e wird hierbei durch die vier zu zwei kleinsten Teilfeldern gehörenden Aufzeichnungspunkte 16 dargestellt. Bei dieser Konstellation können die Summenbildungen für die kleinsten Teilfelder $Fb_{i,j}$ (s. Fig. 5f bzw. Fig. 1b) und für die Teilfelder $Fc_{i,j}$ zweiter Ordnung (s. Fig. 1c) ersetzt werden, indem man die beiden höchstwertigsten Bits des Tonwertes des Abtastpunktes 14e betrachtet. Das höchstwertigste Bit entspricht dabei dem Übertrag-Bit bei der sonst erforderlichen Tonwertsummenbildung für die kleinsten Teilfelder, während das zweithöchstwertigste Bit dem Übertrag-Bit der Tonwertsummenbildung für die Teilfelder zweiter Ordnung entspricht. Die weiteren Stufen des Verfahrens laufen in der im Zusammenhang mit Fig. 3 beschriebenen Weise ab.

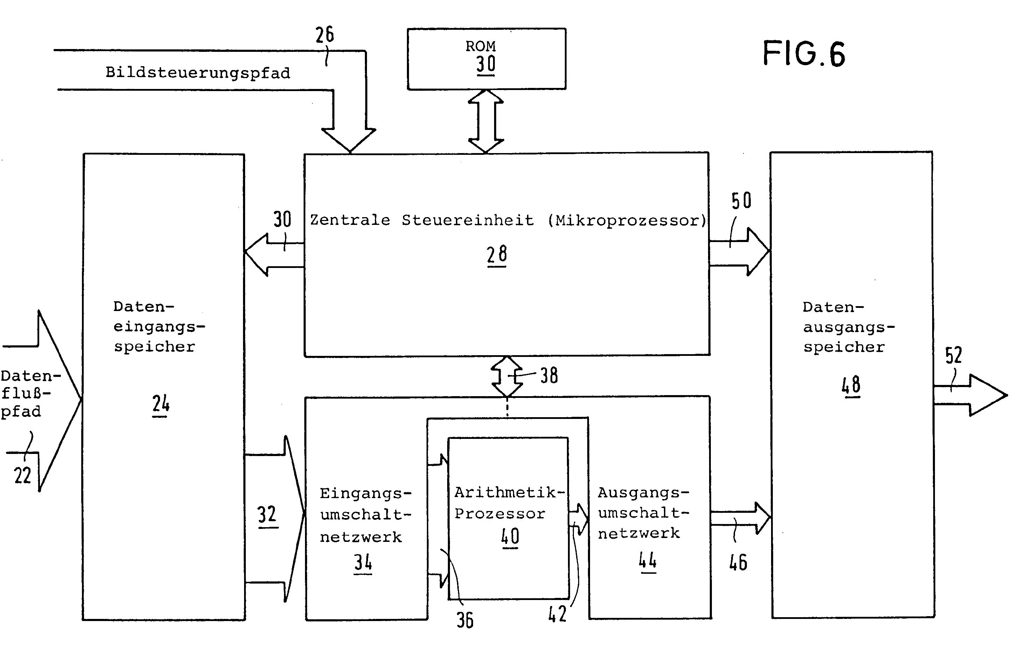

In Fig. 6 ist das Blockschaltbild der Vorrichtung zum Ausführen des zuvor beschriebenen Verfahrens dargestellt. Eine (nicht dargestellte) Sensorvorrichtung, wie z.B. ein Scanner, tastet die Vorlage ab und gibt für jeden Abtastpunkt ein analoges Bildsignal aus, das in einem ebenfalls nicht dargestellten Analog/Digital-Wandler digitalisiert wird und über den Datenflußpfad 22 in einen Dateneingangsspeicher 24 eingegeben wird. Über einen Bildsteuerungspfad 26 gibt der Scanner Steuersignale an eine zentrale Steuereinheit (Mikroprozessor) 28 aus. Bei diesen Steuersignalen handelt es sich z.B. um das Bildanfang-, Bildende- und Zeilenende-Signal. Der Mikroprozessor 28 steuert über eine Steuerleitung 30 den Dateneingangsspeicher 24 derart an, daß die über den Datenflußpfad 22 empfangenen Daten in einzelnen Datenblöcken abgespeichert werden. In einem Datenblock sind dabei sämtliche Tonwertdaten eines Abtastfeldes, z.B. 256 8-stellige Binärcodes, abgespeichert. Die von dem Mikroprozessor in Abhängigkeit von den Signalen auf dem Bildsteuerungspfad 26 ausgegebenen Steuersignale werden einem in einem ROM-Speicher 30 gespeicherten Steuerungsprogramm entsprechend erzeugt.

Wenn sämtliche zu einem Abtastfeld gehörenden Tonwertdaten als Block in dem Dateneingangsspeicher 24 abgespeichert sind, gibt der Dateneingangsspeicher auf ein Signal des Mikroprozessors 28 hin sämtliche 256 Tonwertdatensignale an ein über die Ausgangsleitungen 32 des Dateneingangsspeichers 24 mit diesem verbundenes Eingangsumschaltnetzwerk 34 weiter. Die als Eingangssignale des Eingangsumschaltnetzwerks auf den Leitungen 32 anstehenden Tonwertdatensignale werden auf die Ausgangsleitungen 36 des Eingangsumschaltnetzwerks 34 derart verteilt, daß an benachbarten Ausgangsleitungen des Eingangsumschaltnetzwerks die zu den kleinsten Teilfeldern gehörenden Tonwertdaten anstehen. Das Eingangsumschaltnetzwerk verbindet also seine Eingänge mit seinen Ausgängen in der Weise, daß die zu einem kleinsten Teilfeld gehörenden Tonwertdaten an benachbarten Ausgängen, die zu einem Teilfeld zweiter Ordnung gehörenden Tonwertdatensignale an benachbarten Paaren von Ausgängen usw. anstehen. Das Eingangsumschaltnetzwerk besteht im wesentlichen aus einem Netzwerk gesteuerter Schalter, mit denen je nach Ansteuerung die Eingänge und die Ausgänge des Eingangsumschaltnetzwerks in beliebiger Weise miteinander verbunden werden können. Die Ansteuerung der einzelnen Schalter erfolgt durch den Mikroprozessor 28, der über Steuerleitungen 38 mit dem Eingangsumschaltnetzwerk 34 verbunden ist. In dem ROM 30 sind mehrere Ansteuerungsmuster für das Eingangsumschaltnetzwerk 34 gespeichert, so daß von Abtastfeld zu Abtastfeld die Ansteuerung der Schalter und damit die Zusammenfassung der Tonwertdaten in die einzelnen verschiedengroßen Datenblöcke verändert werden kann. Die Einteilung der Tonwertdaten in die einzelnen verschiedengroßen Blöcke entspricht der Aufteilung des Abtastfeldes in die verschiedengroßen Teilfelder.

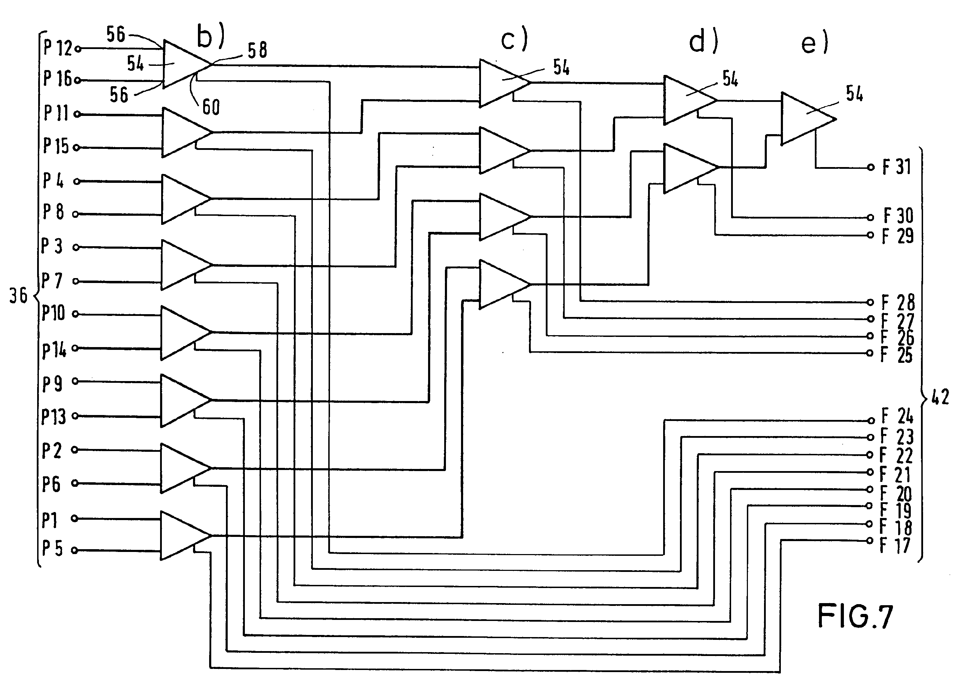

Die in dem Eingangsumschaltnetzwerk 34 "umsortierten" Tonwertdaten werden parallel an einen Arithmetik-Prozessor 40 weitergegeben, der mit den Ausgangsleitungen 36 des Eingangsumschaltnetzwerks 34 verbunden ist. Der Arithmetik-Prozessor 40, der aus einem kaskadenförmig aufgebauten Netzwerk aus einzelnen miteinander verbundenen Digitaladdierern besteht, wird später anhand der Fig. 7 genauer beschrieben. Der Arithmetik-Prozessor 40 führt die Additionsschritte aus und gibt pro Datenblock ein binäres Ausgangssignal aus, das anzeigt, ob in einem einem Datenblock entsprechenden Teilfeld ein Aufzeichnungspunkt zu drucken ist oder nicht. Die für jeden Datenblock ausgegebenen Signale werden über Ausgangsleitungen 42 als Eingangssignale in ein mit den Ausgangsleitungen 42 verbundenes Ausgangsumschaltnetzwerk 44 weitergegeben.

Das Ausgangsumschaltnetzwerk 44 besteht genauso wie das Eingangsumschaltnetzwerk 34 aus einem Netzwerk miteinander verbundener gesteuerter Schalter, die die Eingänge des Ausgangsumschaltnetzwerks mit seinen Ausgängen der Ansteuerung der Schalter entsprechend verbinden. Die Ansteuerungssignale für das Ausgangsumschaltnetzwerk 44, d.h. für die gesteuerten Schalter des Ausgangsumschaltnetzwerks, werden den im ROM 30 gespeicherten Ansteuerungsmustern entsprechend von dem Mikroprozessor 28 erzeugt und über die Steuerleitungen 38, über die auch das Eingangsumschaltnetzwerk 34 gesteuert wird, an das Ausgangsumschaltnetzwerk 44 weitergegeben. Die Anzahl der Ausgänge des Ausgangsumschaltnetzwerks 44 ist gleich der Anzahl der Aufzeichnungspunkte pro Abtastfeld. Legt man beispielsweise die in Fig. 2 dargestellte Verteilung der in Abhängigkeit von den jeweiligen Mittelwerten zu druckenden Aufzeichnungspunkte zugrunde, dann ist die Schaltermatrix des Ausgangsumschaltnetzwerks 44 derart angesteuert, daß jede Eingangsleitung für einen kleinsten Datenblock (für ein kleinstes Teilfeld $Fb_{i,j}$ der Fig. 1b) jeweils mit dem Ausgang des Ausgangsumschaltnetzwerks 44 für den innerhalb des kleinsten Teilfeldes zu druckenden Aufzeichnungspunkt verbunden ist. Genauso sind die Eingänge für die übergeordneten Datenblöcke mit den entsprechenden Ausgängen verbunden.

Die binären Ausgangssignale des Ausgangsumschaltnetzwerks 44 werden über Ausgangsleitungen 46 einem Datenausgangsspeicher 48 zugeführt. Der Datenausgangsspeicher 48 wird von dem Mikroprozessor 28 gesteuert; die dazu erforderlichen Steuersignale werden über Steuerleitungen 50 von dem Mikroprozessor 28 an den Datenausgangsspeicher 48 gesendet. In dem von dem Mikroprozessor 28 gesteuerten Datenausgangsspeicher 48 werden die pro Abtastfeld über die Ausgangsleitungen 46 ankommenden binären Signale der Unterteilung der Vorlage in die Abtastfelder entsprechend abgespeichert. Liegen sämtliche binären Daten für eine Vorlage vor, so werden sie auf ein Signal des Mikroprozessors 28 hin über die Ausgangsleitung 52 des Datenausgangsspeichers 48 an die (nicht dargestellte) Aufzeichnungsvorrichtung weitergegeben.

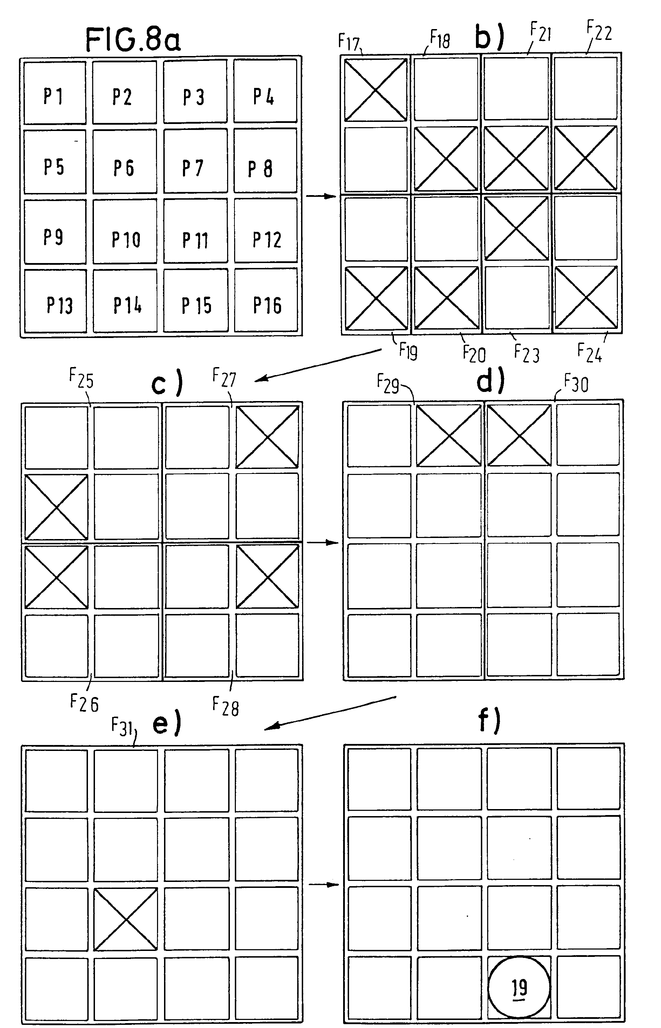

Für die folgenden Betrachtungen sei angenommen, daß ein Abtastfeld aus 16 Abtastpunkten besteht und durch 16 Aufzeichnungspunkte wiedergegeben wird. Der (analoge) Tonwert eines Abtastpunktes wird dann in dem Analog/Digital-Wandler in ein vierstelliges Digitalsignal umgewandelt. Damit lassen sich 16 Tonwerte (von 0 bis 15) binärkodieren. Der Dateneingangsspeicher 24 erhält pro Abtastfeld 16 vierstellige digitale Signale, die er über seine Ausgangsleitungen 32 an das Eingangsumschaltnetzwerk 34 weitergibt. Bei paralleler Datenverarbeitung weist das Eingangsumschaltnetzwerk 16 x 4-Eingänge und 16 x 4-Ausgänge auf. Das aus den 16 Abtastpunkten bestehende Abtastfeld wird, wie in Fig. 8 gezeigt, in insgesamt 15 Teilfelder zerlegt, d.h. der Arithmetik-Prozessor weist 15 Ausgänge auf, nämlich für jedes Teilfeld (jeden Datenblock) einen. Der Arithmetik-Prozessor 40 erzeugt also aus den 16 x 4 binären Eingangssignalen 15 binäre Ausgangssignale. In dem Ausgangsumschaltnetzwerk werden aus diesen 15 binären Ausgangssignalen des Arithmetik-Prozessors 16 binäre Ausgangssignale erzeugt, namlich für jeden der 16 dem Abtastfeld entsprechenden Aufzeichnungspunkte ein Ausgangssignal. Der Datenausgangsspeicher 48 benötigt demnach pro Abtastfeld 16 einzelne Speicherzellen, wohingegen der Dateneingangsspeicher 24 pro Abtastfeld das Vierfache benötigt. Die Datenmenge hat sich also um den Faktor 4 verringert. Allgemeiner gesagt, reduziert sich die Datenmenge um die Quadratwurzel der zu einem Abtastfeld zusammengefaßten Abtast- bzw. Aufzeichnungspunkte.

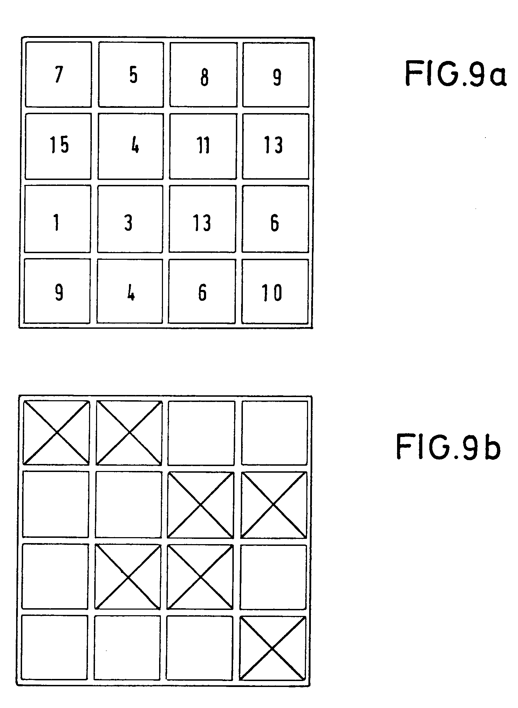

Anhand der Fig. 7 wird der Aufbau des Arithmetik-Prozessors beschrieben, und zwar für den Fall, daß jeweils 16 Aufzeichnungspunkte zu einem Abtastfeld gehören. Zur Darstellung der 16 Tonwerte genügen jedoch 15 Aufzeichnungspunkte. Der in Fig. 8f mit der Bezugsziffer 19 versehene Aufzeichnungspunkt wird nicht benötigt. Das wirkt sich jedoch aus dem im Zusammenhang mit Fig. 2 angeführten Grund für die Wiedergabe nicht störend aus. Die Darstellungen in den Fign. 8 und 9 sind stark vergrößert; tatsächlich haben die Aufzeichnungspunkte jeweils einen Durchmesser von 20 μm.

Das in Fig. 8a gezeigte aus den Abtastpunkten P1 bis P16 bestehende Abtastfeld wird, wie in den Fign.

8b bis 8f gezeigt, in insgesamt 16 Teilfelder unterteilt, die mit den in den Figuren eingezeichneten Bezugszeichen gekennzeichnet sind.

Der Arithmetik-Prozessor 40 besteht aus einem Netzwerk von kaskadenförmig miteinander verbundenen Addierern 54. Die erste "Kaskadenstufe" b weist soviele Addierer 54 auf, wie kleinste Teilfelder bzw. Datenblöcke vorhanden sind. Im vorliegenden Beispiel sind acht kleinste Datenblöcke F17 bis F24 vorhanden. In den Addierern der ersten Stufe b wird jeweils die Tonwertsumme aus den Tonwerten der beiden zu einem kleinsten Datenblock gehörenden Tonwerte addiert. Die zweite Stufe b der Kaskade weist soviele Addierer 54 auf wie Teilfelder (Datenblöcke) zweiter Ordnung vorhanden sind. Gemäß Fig. 8c sind dies vier. Die Eingänge der Addierer 54 der zweiten Stufe c sind mit den Ausgängen derjenigen Addierer 54 der ersten Stufe b verbunden, die die Tonwertsummen der beiden zu dem Datenblock zweiter Ordnung zusammengefaßten kleinsten Datenblöcke berechnen. Zu der dritten Stufe d der Kaskade gehören nur noch zwei Addierer 54, die gemäß der in den Fign. 8c und 8d dargestellten Zusammenfassung von Datenblöcken zweiter Ordnung (Fig. 8c) in Datenblöcke dritter Ordnung (Fig. 8d) mit den Ausgängen der Addierer 54 der Stufe c verbunden sind. In der letzten Kaskadenstufe e befindet sich nur noch ein Addierer 54, dessen Eingänge mit den Ausgängen der beiden Addierer 54 der Stufe d verbunden sind. Bei den in Fig. 7 dargestellten Addierern 54 handelt es sich um 4 Bit-Digitaladdierer, die 2 x 4 Eingänge 56, vier Ausgänge 58 und einen Übertrag-Ausgang 60 aufweisen. Die in Fig. 7 durch dicke Linien dargestellten Anschluß- bzw. Verbindungsleitungen der Addierer 54 stellen jeweils vier parallele Leitungen auf, während die dünn eingezeichneten Leitungen Einzelverbindungen sind.

Die 16 mit den Addierern 54 der ersten Kaskadenstufe b verbundenen 4 Bit-Leitungen stellen die Eingänge 36 des Arithmetik-Prozessors 40 dar. Die Übertrag-Ausgänge 60 der Addierer 54 entsprechen den Ausgängen 42 des Arithmetik-Prozessors 40, wobei jeder Übertrag-Ausgang 60 einem Datenblock (Teilfeld) zugeordnet ist. In Fig. 7 ist kenntlich gemacht, welcher Ausgang zu welchem in Fig. 8 gekennzeichnet Datenblock gehört. Damit beispielsweise der Übertrag-Ausgang 60 des obersten Addierers 54 der ersten Kaskadenstufe b dem Ausgang für den Block F24 entspricht, müssen an den Eingängen 56 des Addierers 54 die Tonwertdaten für die Abtastpunkte P12 und P16 anliegen (Fig. 8). Welche Tonwertdaten an welchen Eingängen 36 des Arithmetik-Prozessors 40 anstehen müssen, ist in Fig. 7 eingezeichnet. Das Eingangsumschaltnetzwerk 34 bewirkt infolge der Ansteuerung durch den Mikroprozessor 28, daß die Tonwertdatensignale in der der Aufteilung des Abtastfeldes in Teilfelder entsprechenden Weise umsortiert und gruppenweise zusammengefaßt werden.

Die Arbeitsweise des Arithmetik-Prozessors 40 wird anhand eines Beispiels erläutert. In Fig. 9a ist für jeden der 16 Abtastpunkte der dazugehörige Tonwert angegeben. Fig. 9b zeigt die Verteilung der zu druckenden Aufzeichnungspunkte, wenn das Abtastfeld mit den in Fig. 9a angegebenen Tonwerten wiedergegeben wird. Die nachfolgend angegebene Berechnung ist analog zu der im Zusammenhang mit Fig. 3 durchgeführten Berechnung.

$$F17 = P1 + P5 \quad \begin{array}{r} OLLL \\ \underline{LLLL} \\ L\ OLLO \end{array} \qquad F18 = P2 + P6 \quad \begin{array}{r} OLOL \\ \underline{OLOO} \\ O\ LOOL \end{array}$$

$$F19 = P9 + P13 \quad \begin{array}{r} OOOL \\ \underline{LOOL} \\ O\ LOLO \end{array} \qquad F20 = P10 + P14 \quad \begin{array}{r} OOLL \\ \underline{OOLO} \\ O\ OLOL \end{array}$$

$$F21 = P3 + P7 \quad \begin{array}{r} LOOO \\ \underline{LOLL} \\ L\ OOLL \end{array} \qquad F22 = P4 + P8 \quad \begin{array}{r} LOOL \\ \underline{LLOL} \\ L\ OLLO \end{array}$$

```
                      LLOL                              OLLO
F23 = P11 + P15       OLLO        F24 = P12 + P16       LOLO
                    --------                          --------
                    L OOLL                            L 0000


                      OLLO                              LOLO
F25 = F17 + F18       LOOL        F26 = F19 + F20       OLOL
                    --------                          --------
                    O LLLL                            O LLLL


                      OOLL                              OOLL
F27 = F21 + F22       OLLO        F28 = F23 + F24       0000
                    --------                          --------
                    O LOOL                            O OOLL


                      LLLL                              LOOL
F29 = F25 + F26       LLLL        F30 = F27 + F28       OOLL
                    --------                          --------
                    L LLL0                            O LLOO


                                 LLLO
                 F31 = F29 + F30 LLOO
                               --------
                               L LOLO
```

Bei Auswertung der jeweiligen bei der Summenbildung entstehenden Übertrag-Bits ergibt sich unter Berücksichtigung der in Fig. 8 angegebenen Verteilung von pro Teilfeld zu druckenden Aufzeichnungspunkten die in Fig. 9b gezeigte Verteilung der innerhalb des Abtastfeldes zu druckenden Aufzeichnungspunkte.

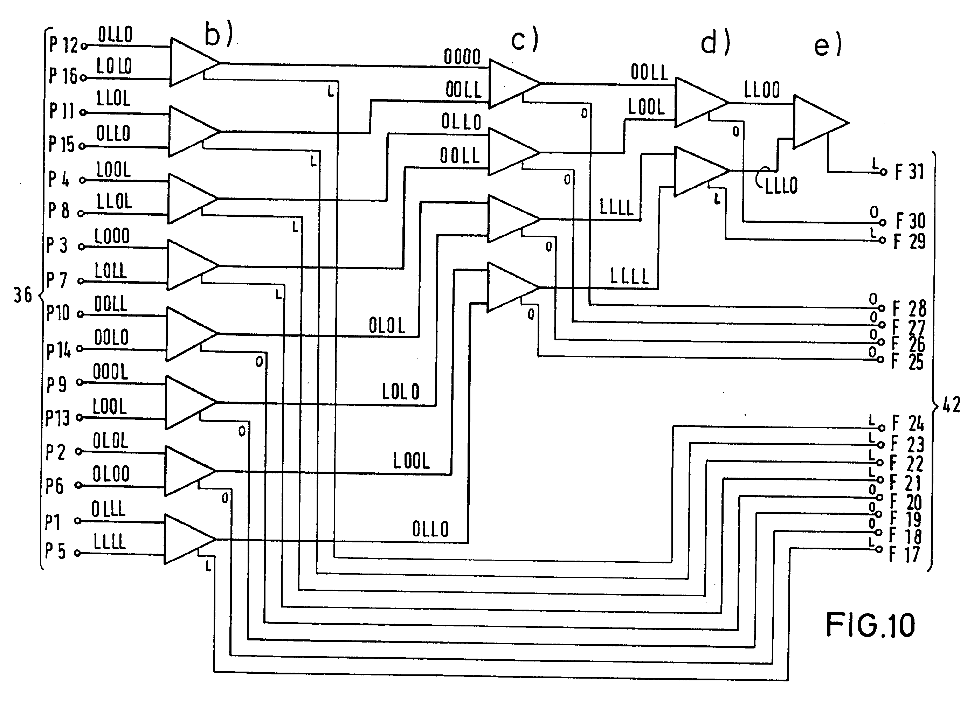

In Fig. 10 ist angegeben, welche digitalen Signale für das in Fig. 9a angegebene Beispiel auf den einzelnen Leitungen des Arithmetik-Prozessors 40 anstehen. Wie man erkennen kann, stehen an den einzelnen Ausgangsleitungen 42 des Arithmetik-Prozessors jeweils ein binäres Signal an, das dem Übertrag-Bit der Tonwertsumme des zugehörigen Datenblocks entspricht. Obwohl in den Kaskadenstufen c, d und e jeweils nicht die vollständigen Tonwertsummen, sondern nur die letzten vier Bits der Tonwertsummen weiterverarbeitet werden, führt dies zu den korrekten Ausgangsdaten. Der Mikroprozessor 28 steuert das Ausgangsumschaltnetzwerk 44 derart an, daß der Eingang des Ausgangsumschaltnetzwerks 44, an dem das Ausgangssignal für einen Datenblock ansteht, mit dem Ausgang des Ausgangsumschaltnetzwerks 44 für denjenigen Aufzeichnungspunkt verbunden ist, der in Abhängigkeit von dem Betrag der Tonwertsumme des Datenblocks zu drucken ist.

Die Fign. 6 und 7 zeigen die schaltungstechnische Realisierung des zuvor beschriebenen Verfahrens. Das in den beiden Figuren dargestellte Ausführungsbeispiel mit vier Kaskadenstufen ist darüber hinaus noch von ganz besonderem Interesse, wenn die Qualitätsansprüche an die Wiedergabe etwas geringer sind. Die abtastseitigen Bildsignale von Scannern im Bürokommunikationsbereich, z.B. von digitalen Kopierern oder von Telefaksimilegeräten, weisen einen weitaus geringeren Signal/Rausch-Abstand auf als es bei den Geräten für die graphische Industrie der Fall ist. Bei Aufteilung der Vorlage in Abtastfelder mit jeweils 16 x 16 = 256 Abtastpunkten würde die zur Verarbeitung erforderliche achtstufige Kaskadenschaltung des Arithmetik-Prozessors 40 auf den letzten Kaskadenstufen praktisch nur Rauschsignale auswerten, was unwirtschaftlich ist. Es ist stattdessen sinnvoll, die Anzahl der Kaskadenstufen auf die Anzahl der "rauschfreien Bildsignal-Bits" zu optimieren. Für eine Reihe von Anforderungen sind vier Kaskadenstufen sowohl besonders wirtschaftlich als auch qualitativ akzeptabel.

Die besondere Wirtschaftlichkeit ergibt sich daraus, daß dann bereits 4 Bit-Addierer genügen, um die Berechnungen nach dem oben beschriebenen Verfahren auszuführen, und daß bereits sehr wenige Additionen, nämlich 1 + 2 + 4 + 8 = 15 genügen, um die vierstufige Kaskade vollständig abzuarbeiten. Weiterhin bestehen dann sowohl die abtastseitige Matrix von Abtastsignalen, die ebenfalls nur jeweils 4 Bit umfassen, als auch die aufzeichnungsseitige Aufzeichnungspunktmatrix nur aus 16 Elementen, so daß nur sehr kleine Speicher nötig bzw. größere Pufferspeicher einfach zu realisieren und zu verwalten sind.

Infolge der hohen Wirtschaftlichkeit und des geringen technischen Aufwandes ist es besonders vorteilhaft, die insgesamt 15 Addierer ohne Zwischenspeicher direkt zusammenzuschalten, wie es in Fig. 7 dargestellt ist. Infolge der direkten Zusammenschaltung bzw. Integration zu einem Baustein gelingt es, die Berechnungen für eine Matrix in deutlich weniger als 100 ns sicher zu gewährleisten.

Der komplexe Addierblock gemäß Fig. 7 kann in vorteilhafter Weise auch die vier oberen Kaskadenstufen einer achtstufigen Kaskade ersetzen, denn auch dort genügt es, die Rauschanteile - gegeben durch die 4 Bits niedriger Ordnung - nach der vierten Kaskadenstufe abzutrennen und nur die tatsächlich ausgewerteten 4 Bits höherer Ordnung weiter zu verarbeiten.

Jedes Abtastfeld kann dieselbe Aufteilung in Teilfelder und dieselbe Verteilung von pro Teilfeld zu druckenden Aufzeichnungspunkten verwenden, wenn an die Qualität der Wiedergabe nicht allzugroße Anforderungen gestellt werden. In einem solchen Fall können das Eingangs- und das Ausgangsumschaltnetzwerk durch eine feste Verdrahtung ihrer Ein- und Ausgänge realisiert werden. Bei Verwendung ein und derselben Unterteilung des Abtastfeldes und Verteilung der zu druckenden Aufzeichnungspunkte entstehen jedoch in der Wiedergabe Muster, die insbesondere im farbigen Printout unerwünscht sind. Die Muster der einzelnen Prozeßfarben überlagern sich nämlich und bilden Interferenzmuster, sogenanntes Moiré, deren Strukturen deutlich größer als die der Einzelfarben sind. Daher ist es besser, wenn die Aufteilung des Abtastfeldes und die Verteilung der zu druckenden Aufzeichnungspunkte (die Adressierung der Abtast- und der Aufzeichnungspunkte) von Abtastfeld zu Abtastfeld verändert wird, wodurch das Auftreten unerwünschter Strukturen vermieden wird. Die Auswahl der jeweiligen Adressierungsarten kann nach einem Zufalls- oder Quasizufallsprinzip vorgenommen werden. Die verschiedenen Adressierungsarten sind bei der in den Fign. 6 und 7 dargestellten Vorrichtung in dem ROM 30 gespeichert, auf den der Mikroprozessor 28 zugreift. Sowohl für die Unterteilung des Abtastfeldes (eingangsseitige Adressierung), für die in Fig. 1 ein Beispiel angegeben ist, als auch für die Verteilung der pro Teilfeld zu druckenden Aufzeichnungspunkte (ausgangsseitige Adressierung), für die in Fig. 2 ein Beispiel angegeben ist, lassen sich mehrere Lösungen finden, die verschiedenen praktischen Anforderungen in unterschiedlichem Maße Rechnung tragen. In der Vorrichtung nach Fig. 6 lassen sich die verschiedenen Adressierungen mit Hilfe der beiden von dem Mikroprozessor 28 gesteuerten Netzwerke 34 und 44 realisieren.

Die vorherige Beschreibung des Verfahrens und der Vorrichtung betrifft den Fall, daß die Vorlage mit gleicher Helligkeit aufgezeichnet wird. Soll sie jedoch dunkler oder heller und/oder kontrastreicher oder -ärmer wiedergegeben werden, so ist es vorteilhaft, die abtastseitigen (analogen) Tonwertsignale vor der Weiterverarbeitung zunächst gemäß einer entsprechenden Zuordnungstabelle bzw. Kennlinie umzurechnen. Dann nämlich können wiederum das Aufzeichnungsverfahren mit dem Grauton 128 als Referenzwert durchgeführt und dementsprechend die Datenumwandlungsvorrichtung gemäß den Fign. 6 und 7 verwendet werden. Sämtliche zuvor abgeleiteten und angegebenen Vereinfachungen gelten somit auch für derartig manipulierte Aufzeichnungsbilder.

## Patentansprüche

1. Verfahren zum Aufzeichnen von Quasihalbtonbildern, bei dem
   - eine Vorlage auf einem Aufzeichnungsmedium durch einzelne Aufzeichnungselemente (16) mit dem Farbwert "Voll" oder "Null" wiedergegeben wird,
   - die Vorlage in mehrere aus einzelnen Abtastelementen (14) bestehende Abtastfelder (12) aufgeteilt wird,
   - jedem Abtastelement (14) entsprechend dem Grad seiner Färbung ein Tonwert auf einer Tonwertskala zwischen einem Maximalwert und einem Minimalwert zugeordnet wird und
   - jedes Abtastfeld (12) in kleinste Teilfelder (Fb) niedrigster Ordnung mit jeweils mehreren zugeordneten Aufzeichnungselementen (16) und sukzessive in Teilfelder jeweils höherer Ordnung unterteilt wird, die aus einer Anzahl von kleinsten Teilfeldern (Fb) bzw. Teilfeldern jeweils niedrigerer Ordnung bestehen,
   **dadurch gekennzeichnet,**
   - daß für jedes kleinste Teilfeld (Fb) bestimmt wird, ob die Summe aus den Tonwerten der zu dem betrachteten kleinsten Teilfeld (Fb) gehörenden Abtastelemente (14) größer ist als ein vorgebbarer Referenztonwert, wobei eines der dem betrachteten kleinsten Teilfeld (Fb) zugeordneten Aufzeichnungselemente (16) wiedergegeben wird, wenn die Summe größer ist als der Referenztonwert,
   - daß danach für die Teilfelder jeweils höherer Ordnung bestimmt wird, ob die Summe aus den Tonwerten der zu dem betrachteten Teilfeld höherer Ordnung gehörenden Abtastelemente (14) abzüglich eines dem maximalen Tonwert entsprechenden Tonwerts für jedes Aufzeichnungselement (16), das einem der dem betrachteten Teilfeld zugeordneten Teilfelder niedrigerer Ordnung bzw. Ordnungen zugeordnet ist und zuvor als wiederzugebendes Aufzeichnungselement (16) ermittelt worden ist, größer ist als der vorgebbare Referenztonwert, und, wenn dies der Fall ist, ein weiteres der dem jeweils betrachteten Teilfeld höherer Ordnung zugeordneten Aufzeichnungselemente (16) wiedergegeben wird, und

- daß die Positionen der in den Teilfeldern verschiedener Ordnung wiederzugebenden Aufzeichnungselemente (16) derart bestimmt werden, daß jedes einem Abtastfeld (12) zugeordnete Aufzeichnungselement (16) höchstens einmal wiedergegeben wird.

2. Verfahren nach Anspruch 1, dadurch gekennzeichnet, daß für ein kleinstes Teilfeld (Fb) als wiederzugebendes Aufzeichnungselement ein Aufzeichnungselement ausgewählt wird, welches dem zu dem kleinsten Teilfeld (Fb) gehörenden Abtastelement mit dem größten Tonwert zugeordnet ist, und für ein Teilfeld höherer Ordnung als wiederzugebendes Abzeichnungselement ein Aufzeichnungselement ausgewählt wird, welches dem Abtastelement des zu dem betrachteten Teilfeld gehörenden Teilfeld nächstniedriger Ordnung mit der größten Tonwertsumme zugeordnet ist, wobei die Position des wiederzugebenden Aufzeichnungselementes jeweils zufällig bestimmt wird, wenn die Tonwerte bzw. die Tonwertsummen untereinander gleich groß sind.

3. Verfahren nach Anspruch 2, dadurch gekennzeichnet, daß im Falle eines gleichmäßig stark eingefärbten Abtast- oder Teilfeldes zufällig gewählte geringe Unterschiede zwischen den Tonwerten der Abtastelemente erzeugt werden.

4. Verfahren nach Anspruch 1, dadurch gekennzeichnet, daß die Position der in Abhängigkeit von den Tonwertsummen zu druckenden Aufzeichnungselemente (16) innerhalb der Teilfelder gleicher Ordnung in einer Zufallsauswahl bestimmt wird.

5. Verfahren nach einem der Ansprüche 1 bis 4, dadurch gekennzeichnet, daß zur Aufzeichnung der Vorlage mit einer Tonwertabstufung, die gröber als diejenige der Vorlage ist, die in Abhängigkeit von den Tonwertsummen der Abtastelemente (14) zu druckenden Aufzeichnungselemente (16) nur für solche Teilfelder gedruckt werden, deren Anzahl an Abtast- bzw. Aufzeichnungselementen (14 bzw. 16) größer oder gleich der zur Darstellung der Vorlage mit der gewünschten Tonwertabstufung erforderlichen Anzahl ist.

6. Verfahren nach einem der Ansprüche 1 bis 5, dadurch gekennzeichnet, daß jedes Abtastfeld (12) sukzessive in jeweils gleichgroße Teilfelder unterteilt wird und daß die Anzahl der Teilfelder, in die jeweils unterteilt wird, gleich ist.

7. Verfahren nach einem der Ansprüche 1 bis 6, dadurch gekennzeichnet, daß die Anordnung der Teilfelder innerhalb des Abtastfeldes (12) regelmäßig ist.

8. Verfahren nach einem der Ansprüche 1 bis 7, dadurch gekennzeichnet, daß $4^n \geq 4$ Abtastelemente (14) in einem $2^n$ Zeilen und $2^n$ Spalten aufweisenden Abtastfeld (12) zusammengefaßt werden und daß jeweils in zwei Teilfelder niedrigerer Ordnung unterteilt wird, wobei n eine natürliche Zahl ist.

9. Verfahren nach einem der Ansprüche 1 bis 7, dadurch gekennzeichnet, daß $4^n \geq 4$ Abtastelemente (14) in einem $2^n$ Zeilen und $2^n$ Spalten aufweisenden Abtastfeld (12) zusammengefaßt werden und daß in jeweils vier Teilfelder niedrigerer Ordnung unterteilt wird, wobei n eine natürliche Zahl ist.

10. Verfahren nach einem der Ansprüche 1 bis 9, dadurch gekennzeichnet, daß die Größe der kleinsten Teilfelder dem Verhältnis aus Aufzeichnungs- zu Abtastfeinheit entspricht.

11. Verfahren nach einem der Ansprüche 1 bis 9, dadurch gekennzeichnet, daß die Aufzeichnungsfeinheit größer als die Abtastfeinheit gewählt wird und daß die Größe der kleinsten Teilfelder (Fb) gleich der Größe zweier Aufzeichnungselemente (16) ist.

12. Verfahren nach Anspruch 11, dadurch gekennzeichnet, daß für diejenigen Teilfelder, die kleiner als oder genauso groß wie ein Abtastelement (14) sind, der Tonwert des Abtastelementes (14), in dem das Teilfeld liegt, als Mittelwert genommen wird.

13. Verfahren nach einem der Ansprüche 1 bis 12, dadurch gekennzeichnet, daß die Abtast- und die Aufzeichnungselemente (14 bzw. 16) jeweils in einem Abtastfeld (12) rechtwinklig angeordnet sind.

14. Verfahren nach einem der Ansprüche 1 bis 11, dadurch gekennzeichnet, daß die Abtast- und die Aufzeichnungselemente (14 bzw. 16) jeweils hexagonal angeordnet sind.

15. Verfahren zum Aufzeichnen von mehrfarbigen Quasihalbtonbildern, die aus mehreren additiven oder subtraktiven Grundfarben zusammengesetzt werden, **dadurch gekennzeichnet,** daß für jede Grundfarbe das Verfahren nach einem der Ansprüche 1 bis 14 durchgeführt wird und die dabei entstehenden Einfarben-Quasihalbtonbilder überlagert werden.

16. Vorrichtung zur Umwandlung von Bildpunkt-Tonwerten, mit
   - einer Verarbeitungseinheit, die die Tonwerte einzelner Abtastbildpunkte (14) einer Vorlage, welche in mehrere Abtastfelder (12) mit jeweils mehreren Abtastbildpunkten (14) unterteilt ist, in Aufzeichnungsbildpunktdaten umrechnet, die entweder dem Farbwert "Voll" oder "Null" entsprechen, wobei einem oder mehreren Abtastbildpunkten (14) ein oder mehrere Aufzeichnungsbildpunkte (16) zugeordnet sind und wobei den Tonwerten der Abtastbildpunkte entsprechend dem Grad ihrer Einfärbung ein Wert einer Tonwertskala zwischen einem Maximalwert und einem Minimalwert zugeordnet werden, dadurch gekennzeichnet, daß die Verarbeitungseinheit aufweist:
      - ein Eingangsumschaltnetzwerk (34), das für jedes Abtastfeld (12) die Tonwerte der zugehörigen Abtastbildpunkte (14) empfängt und die Tonwerte zu Datenblöcken zusammenfaßt, die Abtastbildpunkten (14) entsprechen, welche zu bei Unterteilung des Abtastfeldes (12) entstehenden ineinandergeschachtelten Teilfeldern des Abtastfelds (12) gehören,
      - einen mit dem Eingangsumschaltnetzwerk (34) verbundenen Arithmetik-Prozessor (40), der für jeden einem kleinsten Teilfeld des Abtastfelds (12) zugeordneten Tonwert-Datenblock ein Ausgangssignal ausgibt, das anzeigt, ob die Summe der Tonwerte des Datenblocks größer ist als ein vorgebbarer Referenzwert, und der für jeden einem Teilfeld höherer Ordnung des Abtastfeldes (12) zugeordneten Tonwert-Datenblock ein Ausgangssignal ausgibt, das anzeigt, ob die Summe aus den Tonwerten der zu dem betrachteten Teilfeld höherer Ordnung gehörenden Abtastelemente (14) abzüglich eines dem maximalen Tonwert entsprechenden Tonwertes für jedes Aufzeichnungselement (16), das einem der dem betrachteten Teilfeld zugeordneten Teilfelder niedrigerer Ordnung bzw. Ordnungen zugeordnet ist und zuvor als wiederzugebendes Aufzeichnungselement (16) ermittelt worden ist, größer ist als der vorgebbare Referenztonwert, und
      - ein mit dem Ausgang des Arithmetik-Prozessors (40) verbundenes Ausgangsumschaltnetzwerk (44), das für jedes pro Datenblock von dem Arithmetik-Prozessor (40) ausgegebenes Ausgangssignal einem der Aufzeichnungsbildpunkte (16), die dem diesem Datenblock entsprechenden Teilfeld des Abtastfeldes (12) zugeordnet sind, den Farbwert "Voll" zuordnet und ein diesen Zustand anzeigendes Ausgangssignal ausgibt, wobei die potentiell mit dem Farbwert "Voll" wiederzugebenden Aufzeichnungsbildpunkte (16) derart angeordnet sind, daß jeder Aufzeichnungsbildpunkt (16) höchstens einmal wiedergegeben wird.

17. Vorrichtung nach Anspruch 16, dadurch gekennzeichnet, daß der Arithmetik-Prozessor (40) ein mehrstufiges Netzwerk aus zusammengeschalteten Addierern (54) mit Übertragausgang (60) aufweist, wobei in der untersten Stufe (b) soviele Addierer (54) wie kleinste Datenblöcke vorgesehen sind und jeder Addierer (54) der untersten Stufe (b) die Tonwertdaten der zu einem kleinsten Datenblock gehörenden Bildpunkte addiert, und daß die Ausgänge (58) der Addierer (54) einer Stufe mit den Eingängen (56) der Addierer (54) der nächsthöheren Stufe verbunden sind und die Übertragausgänge (60) der Addierer (54) jeder Stufe die Ausgänge des Arithmetik-Prozessors (40) sind.

18. Vorrichtung nach Anspruch 16 oder 17, dadurch gekennzeichnet, daß eine Steuereinheit (28) vorgesehen ist, die das Eingangsumschaltnetzwerk (34) derart steuert, daß die Eingänge für die Bildpunkt-Tonwertdaten entsprechend der Unterteilung in Datenblöcke mit den Ausgängen verbunden sind, und daß die Steuereinheit (28) das Ausgangsumschaltnetzwerk (44) derart steuert, daß die Eingänge jeweils mit denjenigen Ausgängen verbunden sind, an denen die Daten für die Aufzeichnungsbildpunkte mit dem Farbwert "Voll" anliegen.

EP 0 293 703 B1

**19.** Vorrichtung nach einem der Ansprüche 16 bis 18, dadurch gekennzeichnet, daß die Art der Zusammenfassung der Bildpunkt-Tonwertdaten zu Datenblöcken und die Art der Verteilung der Aufzeichnungsbildpunkte in einem mit der Steuereinheit (28) verbundenen Speicher (30) gespeichert sind.

**20.** Vorrichtung nach Anspruch 19, dadurch gekennzeichnet, daß in dem Speicher (30) mehrere verschiedene Zusammenfassungs- und Verteilungsmuster gespeichert sind.

**21.** Vorrichtung nach einem der Ansprüche 16 bis 19, dadurch gekennzeichnet, daß ein von der Steuereinheit (28) gesteuerter Dateneingangsspeicher (24), in dem die Bildpunkt-Tonwertdaten der Vorlage zwischengespeichert sind und der dem Eingangsumschaltnetzwerk die Tonwertdaten Abtastfeld für Abtastfeld zuführt, und ein von der Steuereinheit (28) gesteuerter Datenausgangsspeicher (48) vorgesehen sind, in dem die pro Abtastfeld von dem Ausgangsumschaltnetzwerk (44) ausgegebenen Aufzeichnungsbildpunktdaten gespeichert werden.

**22.** Vorrichtung nach einem der Ansprüche 16 bis 21, dadurch gekennzeichnet, daß an den Eingängen des Eingangsumschaltnetzwerks (34) jeweils die Bildpunkt-Tonwertdaten eines Abtastfeldes (12), das in einer Matrix mit $2^n$ Zeilen und $2^n$ Spalten angeordnete Bildpunkte umfaßt, anliegen, wobei n eine natürliche Zahl ist und die Tonwerte der Bildpunkte als binäre Zahl mit 2n Stellen vorliegen, und daß die Addierer (54) des Arithmetik-Prozessors (40) Digitaladdierer zum Addieren von 2n-stelligen binären Zahlen sind.

**23.** Vorrichtung nach Anspruch 22, dadurch gekennzeichnet, daß die Anzahl der Übertragausgänge (60) jedes Addierers (54) der Anzahl der Bildpunkt-Tonwertdaten pro kleinstem Datenblock bzw. der Anzahl der zu einem übergeordneten Datenblock gehörenden untergeordneten Datenblöcke entspricht.

**24.** Vorrichtung nach Anspruch 22 oder 23, dadurch gekennzeichnet, daß, wenn die Aufzeichnungsfeinheit größer als die Abtastfeinheit ist, die Eingangsleitungen des Arithmetik-Prozessors (40) für die Bildpunkt-Tonwertdaten mit den Eingängen (56) der Addierer (54) höherer Stufen verbindbar sind, wobei zusätzlich die Eingangsleitungen des Arithmetik-Prozessors (40) für die höchstwertigen Bits der Bildpunkt-Tonwertdaten mit den Ausgängen des Arithmetik-Prozessors (40) verbindbar sind.

**25.** Vorrichtung nach Anspruch 24, dadurch gekennzeichnet, daß bei einer $\sqrt{2}$-mal größeren Aufzeichnungsfeinheit als Abtastfeinheit die Eingangsleitungen des Arithmetik-Prozessors (40) für die Bildpunkt-Tonwertdaten mit den Eingängen (56) der Addierer (54) der zweiten Stufe (c) und zusätzlich die Eingangsleitung des Arithmetik-Prozessors (40) für das jeweils höchstwertige Bit der Bildpunkt-Tonwertdaten mit den Ausgängen des Arithmetik-Prozessors (40) verbindbar sind.

**26.** Vorrichtung nach Anspruch 24, dadurch gekennzeichnet, daß bei einer 2-mal größeren Aufzeichnungsfeinheit als Abtastfeinheit die Eingangsleitungen des Arithmetik-Prozessors (40) für die Bildpunkt-Tonwertdaten mit den Eingängen (56) der Addierer (54) der dritten Stufe (d) und die Eingangsleitungen des Arithmetik-Prozessors (40) für die jeweils höchstwertigen Bits mit den Ausgängen des Arithmetik-Prozessors (40) für die kleinsten Datenblöcke und die Eingangsleitungen des Arithmetik-Prozessors (40) für die jeweils zweithöchstwertigen Bits mit den Ausgängen des Arithmetik-Prozessors (40) für die den kleinsten Datenblöcken übergeordneten Datenblöcke verbindbar sind.

**27.** Vorrichtung nach einem der Ansprüche 16 bis 23, dadurch gekennzeichnet, daß, wenn die Aufzeichnungsfeinheit größer als oder genauso groß wie die Abtastfeinheit ist, die kleinsten Datenblöcke jeweils zwei Tonwertdaten umfassen.

**28.** Vorrichtung nach Anspruch 27, dadurch gekennzeichnet, daß die Steuereinheit (28) das Eingangsumschaltnetzwerk (34) derart ansteuert, daß jeder Eingang für ein Tonwertdatensignal mit einer dem Verhältnis aus Aufzeichnungs- zu Abtastfeinheit entsprechenden Anzahl von Ausgängen verbunden ist.

**29.** Vorrichtung nach Anspruch 28, dadurch gekennzeichnet, daß bei einem Verhältnis von $\sqrt{2}$ ein Eingang für ein Tonwertdatensignal mit zwei Ausgängen verbunden ist.

**30.** Vorrichtung nach Anspruch 28, dadurch gekennzeichnet, daß bei einem Verhältnis von 2 ein Eingang für ein Tonwertdatensignal mit vier Ausgängen verbunden ist.

26

**Claims**

1. A process for recording semihalftone images, in which process
   - an original is reproduced on a recording medium by individual recording elements (16) with a tone value of "full" or "zero",
   - the original is divided into multiple scan fields (12) comprising individual scan elements (14),
   - according to the degree of printing, each scan element (14) is assigned a tonal value on a tonal value scale between a maximum value and a minimum value, and
   - each scan field (12) is subdivided into smallest subfields (Fb) of the lowest order, each having assigned thereto a plurality of recording elements (16), and successively into subfields of higher order, respectively, consisting of a number of smallest subfields (Fb) or subfields of lower order, respectively,
   characterized in that,
   - it is determined for each of the smallest subfields (Fb) whether the sum of the tonal values of the scan elements (14) assigned to the respective smallest subfield (Fb) considered is larger than a predeterminable reference tonal value, one of the recording elements (16) assigned to said smallest subfield (Fb) considered being reproduced, if said sum is larger than said reference tonal value,
   - thereafter, it is determined for the respective higher order subfields, whether the sum of the tonal values of the scan elements (14) assigned to the higher order subfield considered minus a tonal value, which corresponds to said maximum value, for each of said recording elements (16) assigned to a subfield of lower order or orders that is assigned to the subfield considered and has previously been determined as the recording element (16) to be reproduced, is larger than the predeterminable reference tonal value and, if so, a further one of the recording elements (16) assigned to the respective higher order subfield considered is reproduced, and
   - the positions within different order subfields of the recording elements (16) to be reproduced are determined such that each recording element (16) assigned to a scan field (12) is reproduced only once at most.

2. The process in accordance with claim 1, characterized in that for a smallest subfield (Fb) the recording element selected to be reproduced is the recording element assigned to the scan element belonging to the smallest subfield (Fb) and having the largest tonal value, and for a higher order subfield the recording element selected to be reproduced is the one assigned to the scan element of the next-lower order subfield belonging to the subfield being examined and having the largest tonal value sum, whereby the position of the recording element to be reproduced is determined randomly whenever the tonal values or the tonal value sums are equally large.

3. The process in accordance with claim 2, characterized in that in the case of a uniformly heavily printed scan- or subfield, randomly selected slight differences are produced between the tonal values of the scan elements.

4. The process in accordance with claim 1, characterized in that the position within the same order subfields of the recording elements (16) to be printed as a function of the magnitudes of the tonal value sums is determined by random selection.

5. The process in accordance with one of claims 1 to 4, characterized in that, to record the original with a tonal value gradation that is coarser than that of the original, the recording elements (16) to be printed as a function of the tonal value sums of the scan elements (14) are printed only for such subfields, the number of which in scan or recording elements (14 or 16) is larger than or equal to the number required for the representation of the original with the desired tonal value gradation.

6. The process in accordance with one of claims 1 to 5, characterized in that each one of the scan fields (12) is subdivided successively into a number of equal size subfields and that the number of the subfields, into which the one scan field is divided, is the same for all of the scan fields.

7. The process in accordance with one of claims 1 to 6, characterized in that the subfields are arranged regularly within the scan field (12).

8. The process in accordance with one of claims 1 to 7, characterized in that $4^n \geqq 4$ scan elements (14) are compiled into one of the scan fields (12) having $2^n$ rows and $2^n$ columns and the scan field (12) and the respective subfields are subdivided into two lower order subfields, where n is a natural integer.

9. The process in accordance with one of claims 1 to 7, characterized in that $4^n \geqq 4$ scan elements (14) are compiled into one of the scan fields (12) having $2^n$ rows and $2^n$ columns and the scan field (12) and the respective subfields are subdivided into four lower order subfields, where n is a natural integer.

10. The process in accordance with one of claims 1 to 9, characterized in that the size of the smallest subfields corresponds to the ratio of recording definition to scan definition.

11. The process in accordance with one of claims 1 to 9, characterized in that the recording definition is selected to be larger than the scan definition and in that the size of the smallest subfields (Fb) is equal to the size of two of the recording elements (16).

12. The process in accordance with claim 11, characterized in that, for those subfields that are smaller than or of the same size as one of the scan elements (14), the tonal value of the one scan element (14) in which the subfield lies is taken as the average value.

13. The process in accordance with one of claims 1 to 12, characterized in that the scan elements and the recording elements (14 and 16), respectively, are arranged in an orthogonal matrix within a scan field (12).

14. The process in accordance with one of claims 1 to 11, characterized in that the scan elements and the recording elements (14 and 16), respectively, are arranged hexagonally.

15. A process for recording polychromatic semihalftone images of multiple additive or subtractive basic colors, characterized in that the process in accordance with one of claims 1 to 14 is performed for each basic color and the resulting monochromatic semihalftone images are superimposed.

16. Apparatus for converting tonal values of image dots, comprising
   - a processing unit processing the tonal values of individual scan dots (14) of an original divided into multiple scan fields (12) each comprising a plurality of scan dots (14), into recording dot data corresponding either to a tone value of "full" or "zero", one or a plurality of recording dots (16) being assigned to one or a plurality of scan dots (14), and, according to their degree of printing, the tonal values of the scan dots being assigned a value on a tonal value scale between a maximum value and a minimum value,
   characterized in that said processing unit comprises:
   - an input switching network (34) adapted to receive, for each scan field (12), the tonal values of the associated scan dots (14) and to compile the tonal values into data blocks corresponding to scan dots (14) belonging to nested subfields of the scan field (12) that result from the subdivision of said scan field (12),
   - an arithmetic processor (40) connected to said input switching network (34), said arithmetic processor outputting an output signal for each tonal value data block assigned to one of the smallest subfields of said scan field (12), said output signal indicating whether the sum of the tonal values of the data block is larger than a predeterminable reference value, and said arithmetic processor outputting an output signal for each tonal value data block assigned to one of the higher order subfields of said scan field (12), said output signal indicating whether the sum of the tonal values of the scan element (14) assigned to the higher order subfield considered minus a tonal value, which corresponds to said maximum value, for each recording element (16) assigned to a subfield of lower order or orders that is assigned to the subfield considered and has previously been determined as the recording element (16) to be reproduced, is larger than the predeterminable reference tonal value and,
   - an output switching network (44) connected with the arithmetic processor (40), the output switching network being adapted to assign, for each output signal outputted by the arithmetic processor (40) per data block, the print value "full" to each recording dot (16) assigned to a subfield of said scan field (12) that corresponds to this data block, and to output an output signal representative of this state, the recording dots (16) to be potentially reproduced with the print value "full" being arranged such that each recording dot (16) is reproduced only once at most.

17. The apparatus in accordance with claim 16, characterized in that the arithmetic processor (40) has a multistage network of connected adders (54) with a transfer output (60), the lowest stage (b) having as many adders (54) as there are smallest data blocks and each adder (54) of the lowest stage (b) adding the tonal value data of an image dot belonging to one of the smallest data blocks, and that the outputs (58) of the adders (54) of one stage are connected with the inputs (56) of the adders (54) of the next higher stage and the transfer outputs (60) of the adders (54) of each stage are the outputs of the arithmetic processor (40).

18. The apparatus according to claim 16 or 17, characterized in that there is provided a control unit (28) for controlling the input switching network (34) such that the inputs for the image dot tonal value data are connected with the outputs according to the subdivision into data blocks, and that the control unit (28) controls said output switching network (44) such that the inputs are respectively connected with those outputs at which the data for the recording dots with the print value "full" are present.

19. The apparatus in accordance with one of claims 16 to 18, characterized in that there is provided a storage device (30) connected with the control unit (28), the storage device storing the type of the compilation of the image dot tonal value data into data blocks and the type of the distribution of the recording image dots.

20. The apparatus in accordance with claim 19, characterized in that a number of different compilation and distribution patterns are stored in the storage device (30).

21. The apparatus in accordance with one of claims 16 to 19, characterized in that there are provided a data input storage device (24) controlled by the control unit (28), the storage device storing temporarily the image dot tonal value data of the original and transmitting the tonal value data scan field by scan field to the input switching network, and a data output storage device (48) controlled by the control unit (28), the output storage device storing the recording image dot data outputted per scan field from the output switching network (44).

22. The apparatus according with one of claims 16 to 21, characterized in that the image dot tonal value data of a scan field (12) that comprises image dots arranged in a matrix with $2^n$ rows and $2^n$ columns are present at respective inputs of the input switching network (34), n being a natural number, and the tonal values of the image dots being present as binary numbers with 2n places, and in that the adders (54) of the arithmetic processor (40) are digital adders for adding 2n place binary numbers.

23. The apparatus in accordance with claim 22, characterized in that the number of transfer outputs (60) of each of the adders (54) corresponds to the number of image dot tonal value data per smallest data block or the number of lower order data blocks belonging to a higher order data block.

24. The apparatus in accordance with claim 22 or 23, characterized in that, if a recording definition is greater than a scan definition, input lines of the arithmetic processor (40) for the image dot tonal value data can be connected with the inputs (56) of the adders (54) of one of the higher stages, and, in addition, the input lines of the arithmetic processor (40) for the highest value bits of the image dot tonal value data can be connected with the outputs of the arithmetic processor (40).

25. The apparatus in accordance with claim 24, characterized in that, for a recording definition $\sqrt{2}$ as great as a scan definition, the input lines of the arithmetic processor (40) for the image dot tonal value data can be connected with the inputs (56) of the adders (54) of the second stage (c), and, in addition, the input line of the arithmetic processor (40) for the respective highest value bit of the image dot tonal value data can be connected with the outputs of the arithmetic processor (40).

26. The apparatus in accordance with claim 24, characterized in that, for a recording definition twice as great as a scan definition, the input lines of the arithmetic processor (40) for the image dot tonal value data can be connected with the inputs (56) of the adders (54) of the third stage (d) and the input lines of the arithmetic processor (40) for the respective highest value bits of the image dot tonal value data can be connected with the outputs of the arithmetic processor (40) for the smallest data blocks, and the input lines of the arithmetic processor (40) for the respective second highest bits can be connected with the outputs of the arithmetic processor (40) for the data blocks of higher order than the smallest data blocks.

**27.** The apparatus in accordance with one of claims 16 to 23, characterized in that the smallest data blocks comprise two tonal value data, if the recording definition is greater than or equal to the scan definition.

**28.** The apparatus in accordance with claim 27, characterized in that the control unit (28) controls the input switching network (34) such that each of the inputs for a tonal value data signal is connected with a number of the outputs corresponding to the ratio of recording definition to scan definition.

**29.** The apparatus in accordance with claim 28, characterized in that, at a ratio of $\sqrt{2}$, one of the inputs for a tonal value data signal is connected with two of the outputs.

**30.** The apparatus in accordance with claim 28, characterized in that, at a ratio of 2, one of the inputs for a tonal value data signal is connected with four of the outputs.

**Revendications**

**1.** Procédé d'enregistrement d'images en quasi demi-teintes, dans lequel:
- un original est restitué sur un milieu d'enregistrement par des éléments individuels d'enregistrement (16) présentant la valeur de tonalité "pleine" ou "zéro",
- l'original est divisé en une pluralité de champs d'exploration (12) composés d'éléments individuels d'exploration (14),
- une valeur de tonalité, sur une échelle de valeurs de tonalité, variant entre une valeur maximale et une valeur minimale, est affectée à chaque élément d'exploration (14) en correspondance avec son degré de coloration et
- chaque champ d'exploration (12) est divisé en champs partiels minimaux (Fb) de l'ordre le plus bas, présentant chacun plusieurs éléments d'enregistrement (16), puis successivement en champs partiels à chaque fois d'un ordre plus élevé et composés d'une pluralité de champs partiels minimaux (Fb) ou de champs partiels d'un ordre, chaque fois inférieur,
caractérisé en ce que
- pour chacun des champs partiels minimaux (Fb) on détermine si la somme des valeurs de tonalité des éléments d'exploration (14) appartenant au champ partiel minimal (Fb) concerné est supérieur à une valeur de tonalité de référence susceptible d'être fournie à l'avance, un des éléments d'enregistrement (16) associé au champ partiel minimal (Fb) concerné étant restitué quand ladite somme est supérieure à la valeur de tonalité de référence,
- ensuite, pour les champs partiels de chacun des ordres supérieurs, on détermine si la somme des valeurs de tonalité des éléments d'exploration (14) appartenant au champ partiel d'ordre supérieur concerné, moins une valeur de tonalité corrrespondant à la valeur de tonalité maximale, pour chacun des éléments d'enregistrement (16) qui est associé à l'un des champs partiels d'ordre ou d'ordres inférieur(s) correspondant au champ partiel concerné et qui a été déterminé précédemment comme élément d'enregistrement (16) à restituer, est supérieur à la valeur de tonalité de référence susceptible d'être fournie à l'avance et quand ceci est le cas, un autre des éléments d'enregistrement (16) associés au champ partiel d'ordre supérieur concerné est restitué, et
- les positions des éléments d'enregistrement (16) à restituer dans les champs partiels de différents ordres est déterminée de telle façon que chacun des éléments d'enregistrement (16) associés à un champ d'exploration (12) soit restitué au plus une seule fois.

**2.** Procédé selon la revendication 1, caractérisé en ce qu'on choisit comme élément d'enregistrement à restituer pour un champ partiel minimal (Fb) un élément d'enregistrement qui est associé à l'élément d'exploration appartenant au champ partiel minimal (Fb) et présentant la valeur de tonalité la plus élevée, et en ce qu'on choisit comme élément d'enregistrement à restituer pour un champ partiel d'un ordre supérieur, un élément d'enregistrement qui est associé à l'élément d'exploration du champ partiel appartenant au champ partiel d'ordre immédiatement inférieur concerné, qui présente la somme des valeurs de tonalité la plus élevée, la position de l'élément d'enregistrement à restituer étant déterminée dans chaque cas aléatoirement, quand les valeurs de tonalité ou, respectivement, les sommes des valeurs de tonalité, sont égales.

**3.** Procédé selon la revendication 2, caractérisé en ce qu'on produit, dans le cas d'un champ d'exploration ou d'un champ partiel dont la coloration est d'une intensité élevée et uniforme, de légères différences, choisies aléatoirement, entre les valeurs de tonalité des éléments d'exploration.

4. Procédé selon la revendication 1, caractérisé en ce qu'on détermine par un choix aléatoire la position à l'intérieur des champs partiels du même ordre, des éléments d'enregistrement (16) à imprimer en fonction des sommes des valeurs de tonalité.

5. Procédé selon l'une des revendications 1 à 4, caractérisé en ce qu'afin d'enregistrer l'original avec une échelle des tonalités qui est moins fine que celle de l'original, on n'imprime les éléments d'enregistrement (16) à imprimer en fonction des sommes des valeurs de tonalité des éléments d'exploration (14) que pour ceux des champs partiels dont le nombre d'éléments d'exploration ou, respectivement, d'enregistrement (14; 16) est supérieur ou égal au nombre nécessaire pour restituer l'orignal avec l'échelle des tonalités souhaitée.

6. Procédé selon l'une des revendications 1 à 5, caractérisé en ce que chacun des champs d'exploration (12) est divisé successivement en des champs partiels qui sont dans chaque cas de la même taille, et en ce que le nombre des champs partiels, entre lesquels la division est réalisée, est égal dans chaque cas.

7. Procédé selon l'une des revendications 1 à 6, caractérisé en ce que la disposition des champs partiels à l'intérieur du champ d'exploration (12) est uniforme.

8. Procédé selon l'une des revendications 1 à 7, caractérisé en ce que $4^n \geq 4$ éléments d'exploration (14) sont réunis dans un champ d'exploration (12) composé de $2^n$ lignes et $2^n$ colonnes, et en ce que la division est réalisée dans chaque cas en deux champs partiels d'ordre inférieur, n étant un entier naturel.

9. Procédé selon l'une des revendications 1 à 7, caractérisé en ce que $4^n \geq 4$ éléments d'exploration (14) sont réunis dans un champ d'exploration (12) composé de $2^n$ lignes et $2^n$ colonnes, et en ce que la division est réalisée dans chaque cas en quatre champs partiels d'ordre inférieur, n étant un entier naturel.

10. Procédé selon l'une des revendications 1 à 9, caractérisé en ce que la taille des champs partiels minimaux correspond au rapport entre la résolution d'enregistrement et la résolution d'exploration.

11. Procédé selon l'une des revendications 1 à 9, caractérisé en ce qu'on choisit une résolution d'enregistrement supérieure à la résolution d'exploration et en ce que la taille des champs partiels minimaux est égale à la taille de deux éléments d'enregistrement (16).

12. Procédé selon la revendication 11, caractérisé en ce que, pour ceux des champs partiels qui sont plus petits ou de la même taille qu'un élément d'exploration (14) on prend comme valeur moyenne la valeur de tonalité de l'élément d'exploration (14) dans lequel est situé le champ partiel.

13. Procédé selon l'une des revendications 1 à 12, caractérisé en ce que les éléments d'exploration et d'enregistrement (14, 16) sont disposés dans un champ d'exploration 12, à angles droits.

14. Procédé selon l'une des revendications 1 à 11, caractérisé en ce que les éléments d'exploration et d'enregistrement (14 ou 16) sont disposés dans chaque cas hexagonalement.

15. Procédé d'enregistrement d'images multicolores en quasi demi-teintes, composées d'une pluralité de couleurs de base additives ou soustractives, caractérisé en ce qu'on réalise, pour chacune des couleurs de base, le procédé selon l'une des revendications 1 à 14 et et en ce qu'on superpose les images monochromes en quasi demi-teintes qui en résultent.

16. Dispositif de transformation des tonalités des points d'une image comprenant:
    - une unité de traitement qui convertit les tonalités des points (14) individuels de l'image d'exploration d'un original qui est divisé en une pluralité de champs d'exploration (12) composé chacun d'une pluralité de points (14) de l'image d'exploration en des données pour l'enregistrement des points de l'image qui correspondent soit à la valeur de tonalité "pleine" ou "zéro", un ou plusieurs des points (14) de l'image d'exploration étant associé(s) à un ou plusieurs des points (16) de l'image d'enregistrement; et les tonalités des points de l'image d'exploration sont fixées en fonction du degré de coloration, à une valeur sur une échelle des valeurs de tonalité, entre une valeur maximale et une valeur minimale, caractérisé en ce que l'unité de traitement comprend:

- un réseau de commutation d'entrée (34), qui reçoit, pour chaque champ d'exploration (12) les valeurs de tonalité des points (14) de l'image d'exploration qui y appartiennent et qui réunit les valeurs de tonalité en des blocs de données correspondant à des points (14) de l'image d'exploration qui appartiennent à des champs partiels de ce champ d'exploration (12), emboîtés l'un dans l'autre et qui sont le résultat de la division du champ d'exploration (12),

- un processeur arithmétique (40) relié au réseau de commutation d'entrée (34), qui fournit, pour chacun des blocs de données de valeurs de tonalité associées à un des champs partiels minimaux du champ d'exploration (12), un signal de sortie qui indique si la somme des valeurs de tonalité du bloc de données est supérieur à une valeur de référence susceptible d'être fournie à l'avance, et qui fournit, pour chacun des blocs de données de valeurs de tonalité associées à un champ partiel d'ordre supérieur du champ d'exploration (12), un signal de sortie qui indique si la somme des valeurs de tonalité des éléments d'exploration (14) appartenant au champ partiel d'ordre supérieur concerné moins une valeur de tonalité correspondant à la valeur de tonalité maximale, pour chacun des éléments d'enregistrement (16) qui est associé à l'un des champs partiels d'ordre ou d'ordres inférieur(s) correspondant au champ partiel concerné et qui a été déterminé en avance comme élément d'enregistrement (16) à restituer, est supérieure à la valeur de tonalité de référence susceptible d'être fixée à l'avance et

- un réseau de commutation de sortie (34) relié à la sortie du processeur arithmétique (40) qui, pour chacun des signaux de sortie émis, pour chaque bloc de données, par le processeur arithmétique (40), affecte la valeur de coloration "pleine" à l'un des points de l'image d'enregistrement (16), lesdits points étant associés au champ partiel du champ d'exploration (12) correspondant à ce bloc de données, en émettant un signal de sortie indicatif de cet état; les points de l'image d'enregistrement (16) susceptibles d'être restitués potentiellement avec la valeur de coloration "pleine" étant disposés de telle façon que chaque point de l'image d'enregistrement (16) est restitué au maximum une fois.

17. Dispositif selon la revendication 16, caractérisé en ce que le processeur arithmétique (40) présente un réseau multi-étagé composé d'additionneurs (54), reliés entre eux et avec une sortie de valeur de retenue (60), un nombre d'additionneurs (54), égal au nombre des blocs de données minimaux étant prévu dans le premier étage (b), chaque additionneur (54) de l'étage le plus bas additionnant les données de tonalité des points de l'image qui appartiennent à un des blocs de données minimaux, et en ce que les sorties (58) des additionneurs (54) d'un étage sont reliés aux entrées des additionneurs (54) de l'étage immédiatement supérieur et en ce que les sorties de la valeur de retenue (60) des additionneurs (54) de chaque étage constituent des sorties du processeur arithmétique (40).

18. Procédé selon l'une des revendications 16 ou 17, caractérisé en ce qu'une unité de commande (28) est prévue qui réalise la commande du réseau de commutation d'entrée (34), de telle façon que les entrées pour les données de tonalité des points de l'image sont reliées, avec les sorties, en fonction de la division en blocs de données, et en ce que l'unité de commande (28) réalise la commande du réseau de commutation de sortie (44) de telle façon que les entrées sont dans chaque cas reliées avec celles des sorties sur lesquelles sont présentes les données pour les points de l'image d'enregistrement présentant la valeur de coloration "pleine".

19. Dispositif selon l'une des revendications 16 à 18, caractérisé en ce que la façon de regrouper les données de tonalité des points de l'image en des blocs de données, ainsi que la façon de répartir les points de l'image d'enregistrement, sont stockées dans une mémoire (30) reliée à l'unité de commande (28).

20. Dispositif selon la revendication 19, caractérisé en ce que plusieurs modèles de regroupement et de répartition différents sont stockés dans la mémoire (30).

21. Dispositif selon l'une des revendications 16 à 19, caractérisé en ce qu'il comprend une mémoire de données d'entrée (24) commandée par l'unité de commande (28), constituant un moyen de stockage intermédiaire pour les données de tonalité des points de l'image de l'original qui fournit les données de tonalité au réseau de commutation d'entrée, un champ d'exploration après l'autre, ainsi qu'une mémoire de sortie des données (48) commandée par l'unité de commande (28) dans laquelle sont stockées les données des points de l'image d'enregistrement, fournies par le réseau de commutation de sortie (44), pour chaque champ d'exploration.

**22.** Dispositif selon l'une des revendications 16 à 21, caractérisé en ce que, sur les entrées du réseau de commutation d'entrée (34) sont présentes dans chaque cas les données de tonalité des points de l'image d'un champ d'exploration (12) comprenant des points de l'image disposés dans une matrice avec $2^n$ lignes et $2^n$ colonnes, n étant un entier naturel et les valeurs de tonalité des points de l'image étant présentes sous forme de nombres binaires à 2n chiffres, et en ce que les additionneurs (54) du processeur arithmétique (40) sont des additionneurs numériques pour l'addition de nombres binaires à 2n chiffres.

**23.** Dispositif selon la revendication 22, caractérisé en ce que le nombre de sorties de valeur de retenue (60) de chaque additionneur (54) correspond au nombre de données de tonalité des points d'image par bloc de données minimal, ou au nombre des blocs de données d'ordre inférieur appartenant à un bloc de données d'ordre supérieur.

**24.** Dispositif selon l'une des revendications 22 ou 23, caractérisé en ce que, dans le cas où la résolution d'enregistrement est supérieure à la résolution d'exploration, les lignes d'entrée du processeur arithmétique (40) pour les données de tonalité des points d'image sont susceptibles d'être connectées aux sorties (56) des additionneurs (54) des étages supérieurs et en ce que, de plus, les lignes d'entrée du processeur arithmétique (40), pour les bits de poids les plus forts des données des tonalités des points de l'image, sont susceptibles d'être connectées aux sorties du processeur arithmétique (40).

**25.** Dispositif selon la revendication (24) caractérisé en ce que, pour une résolution d'enregistrement $\sqrt{2}$ fois plus grande que la résolution d'exploration, les lignes d'entrée du processeur arithmétique (40) pour les données de tonalité des points de l'image sont susceptibles d'être connectés aux additionneurs (54) du deuxième étage (c) et en ce que, de plus, les lignes d'entrée du processeur arithmétique (40) pour chaque bit de poids fort des données de tonalité des points de l'image sont susceptibles d'être connectées aux sorties du processeur arithmétique (40).

**26.** Dispositif selon la revendication 24, caractérisé en ce que pour une résolution d'enregistrement deux fois plus grande que la résolution d'exploration, les lignes d'entrée du processeur arithmétique (40) pour les données de tonalité des points de l'image sont susceptibles d'être connectées aux entrées (56) des additionneurs (54) du troisième étage (d) et en ce que les lignes d'entrée du processeur arithmétique (40) pour les bits de poids les plus forts, sont susceptibles d'être connectés aux sorties du processeur arithmétique (40) pour les blocs de données minimaux et en ce que les lignes d'entrée du processeur arithmétique (40) pour les bits dont le poids est immédiatement inférieur au poids le plus fort sont susceptible d'être connectés aux sorties du processeur arithmétique (40) pour les blocs de données d'ordre supérieur à l'ordre des blocs de données minimaux.

**27.** Dispositif selon l'une des revendications 16 à 23, caractérisé en ce que, lorsque la résolution d'enregistrement est supérieure ou égale à la résolution d'exploration, les blocs de données les plus petits comportent dans chaque cas deux données de tonalité.

**28.** Dispositif selon la revendication 27, caractérisé en ce que l'unité de commande 28 réalise la commande du réseau de commutation d'entrée (34) de telle façon que chaque entrée, pour un signal de données de tonalité, est connectée à des sorties dont le nombre dépend du rapport entre la résolution d'enregistrement et la résolution d'exploration.

**29.** Dispositif selon la revendication 28, caractérisé en ce que, pour un rapport de $\sqrt{2}$, une entrée pour un signal de données de tonalité est connectée à 2 sorties.

**30.** Dispositif selon la revendication 28, caractérisé en ce que, pour un rapport de 2, une entrée pour un signal de données de tonalité est connectée à quatre sorties.

FIG.1a

$Fg_{1,1}$    $Fg_{1,2}$

FIG.1g

$Fg_{2,1}$    $Fg_{2,2}$

$Fh_1$    $Fh_2$

h)

$Fi$

12

i)

# FIG.2a

FIG.2g

h)

i)

FIG.3a

FIG.4a

# FIG.5a

a) 14a, 12a

b) $Fb_{1,1}$, $Fb_{1,2}$, 16

c) 14c, 12c

d) $Fb_{1,1}$, $Fb_{1,2}$, $Fb_{1,3}$, $Fb_{2,1}$, 16

e) 14e, 12e

f) $Fb_{1,1}$, $Fb_{1,2}$, $Fb_{2,1}$, $Fb_{3,1}$, 16

FIG.6

FIG.7

# FIG.8a

FIG.9a

FIG.9b

FIG.10